(19) Europäisches Patentamt
European Patent Office
Office européen des brevets

(11) Veröffentlichungsnummer: **0 444 604 A2**

(12) # EUROPÄISCHE PATENTANMELDUNG

(21) Anmeldenummer: **91102815.7**

(22) Anmeldetag: **26.02.91**

(51) Int. Cl.⁵: **C08K 5/14**, C08K 5/23, C08L 27/12

(30) Priorität: **26.02.90 DE 4006058**

(43) Veröffentlichungstag der Anmeldung: **04.09.91 Patentblatt 91/36**

(84) Benannte Vertragsstaaten: **AT CH DE ES FR GB IT LI NL SE**

(71) Anmelder: **ATOCHEM Deutschland GmbH
Denzinger Strasse 7
W-8870 Günzburg(DE)**

(72) Erfinder: **Rauer, Kurt, Dr.
Immelmannstrasse 8
W-8870 Günzburg(DE)**
Erfinder: **Groepper, Jürgen
Hinter den Gärten 12
W-8870 Günzburg(DE)**
Erfinder: **Albrecht, Renate
Babenhauser Strasse 14
W-8909 Ebershausen(DE)**

(74) Vertreter: **Abitz, Walter, Dr.-Ing. et al
Abitz, Morf, Gritschneder, Freiherr von Wittgenstein Postfach 86 01 09
W-8000 München 86(DE)**

(54) **Vernetzung von Fluorkautschuk mittels Vernetzungsinitiatoren, die keine Methyl- oder Phenyl-Radikale bilden.**

(57) Verfahren zur Vernetzung von Brom- und/oder Jodatome enthaltenden Fluorkautschuken unter Verwendung von speziellen Peroxiden aus den Gruppen der t-Alkylperoxide, der Peroxyketale und der Peroxyester sowie von Azo-estern, die alle keine Methyl-Radikale und keine Phenyl-Radikale bilden und 10 Stunden-Halbwertszeit-Temperaturen über 80 °C aufweisen, gegebenenfalls in Gegenwart von Vernetzungsverstärkern und gegebenenfalls Antioxidantien.

EP 0 444 604 A2

Gegenstand der Erfindung ist die Vernetzung von Fluorkautschuk, der Brom- und/oder Jodatome enthält, mittels radikalischer Vernetzungsinitiatoren, die während der thermischen Spaltung keine Methyl- oder Phenyl-Radikale bilden und 10-Stunden-Halbwertszeit-Temperaturen über 80 °C aufweisen.

Fluorkautschuke sind Copolymere aus zwei oder mehreren fluorhaltigen Monomeren. Beispiele von Fluorkautschuken sind Vinylidenfluorid-Hexafluorpropylen-Copolymer, Vinylidenfluorid-Hexafluorpropylen-Tetrafluorethylen-Terpolymer, Tetrafluorethylen-Vinylidenfluorid-Perfluormethylperfluorvinylether-Terpolymer,Tetrafluorethylen-Propylen-Copolymer, Tetrafluorethylen-Vinylidenfluorid-Hexafluorpropylen-Pentafluorpropylen-Copolymer. Daneben gibt es auch Fluorkautschuke, die zusätzlich noch Brom- oder/und Jodatome in Mengen von etwa 0,001 % bis 5 % enthalten. Wenn gute physikalische Eigenschaften gefordert sind, wird die peroxidische Vernetzung anderen Vernetzungsarten vorgezogen; für die peroxidische Vernetzung bedient man sich der bromierten und/oder jodierten Fluorkautschuke. Als Vernetzungsinitiator wird in solchen Fällen bevorzugt das Peroxid 2,5-Dimethyl-2,5-bis(t-butylperoxy)-hexan I alleine oder noch häufiger in Kombinationen mit den Vernetzungsverstärkern Triallylcyanurat II oder insbesondere Triallylisocyanurat III aber auch II und III gemeinsam eingesetzt:

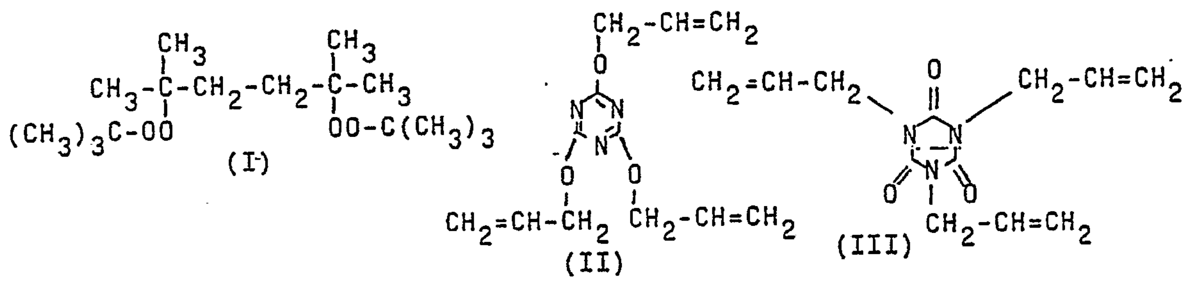
(I) (II) (III)

Alle in der industriellen Praxis verwendeten Vernetzungsperoxide bilden als sekundäre thermische Spaltprodukte Methyl-Radikale oder auch Phenyl-Radikale. So zerfällt thermisch beispielsweise Di-t-butylperoxid IV primär in zwei t-Butoxy-Radikale V, von denen sekundär ein Teil die Spaltprodukte Aceton und Methyl-Radikal bildet:

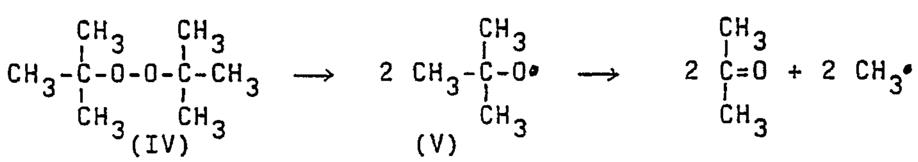
(IV) (V)

Dicumylperoxid VI beispielsweise zerfällt thermisch primär in zwei Cumylperoxy-Radikale VII, von denen sich ein Teil sekundär in Acetophenon und Methyl-Radikal spaltet:

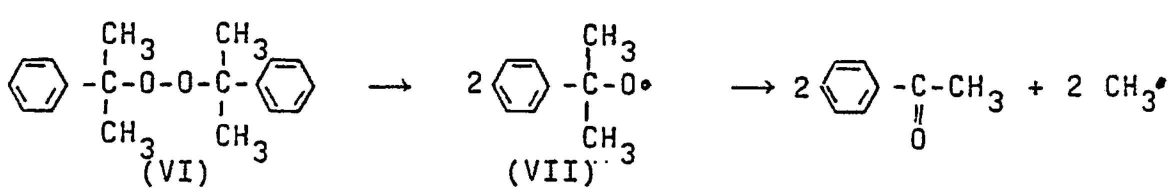
(VI) (VII)

Die Methyl-Radikale reagieren mit den im Fluorkautschuk enthaltenen Wasserstoff- bzw. Brom- und Jod-Atomen unter Bildung von Methan bzw. der toxischen, carcinogenen und leicht flüchtigen Verbindungen Methylbromid und Methyljodid.

t-Butylperoxybenzoat VIII beispielsweise zerfällt thermisch primär in ein Benzoyloxy-Radikal und ein t-Butoxy-Radikal, die sich sekundär teilweise in $CO_2$ und Phenyl-Radikal bzw. in Aceton und Methyl-Radikal spalten:

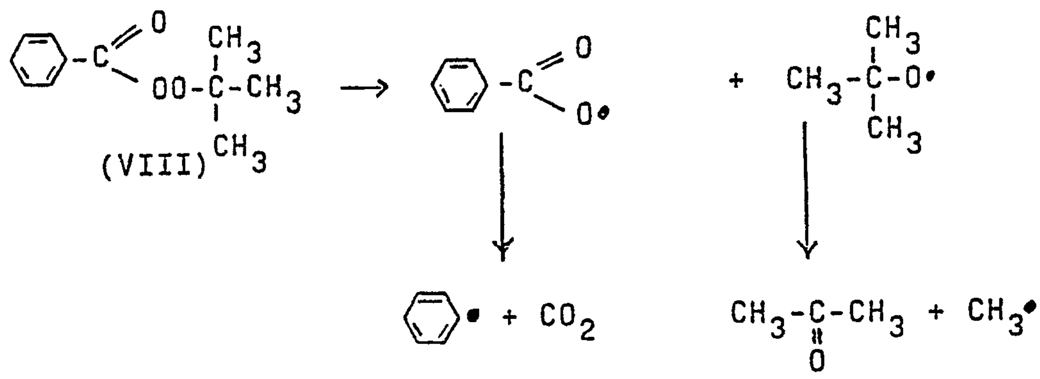

Die Phenyl-Radikale reagieren mit den im Fluorkautschuk enthaltenen Wasserstoff- bzw. Brom- und Jod-Atomen unter Bildung des toxischen, carcinogenen und leicht flüchtigen Benzols bzw. von Brombenzol und Jodbenzol.

Methyl-Radikale können nicht nur aus t-Butylperoxy- oder Cumylperoxy-Gruppen oder analogen Gruppen entstehen, sondern auch aus (scheinbar harmlosen) Molekülteilen. Beispiele hierfür sind die Peroxyketale IX und X, deren Zerfall (durch die gestrichelte Linie angedeutet) ebenfalls zu Methyl-Radikalen führt.

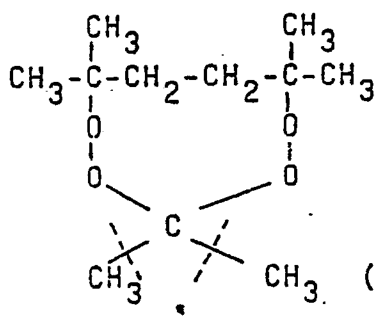
(IX)

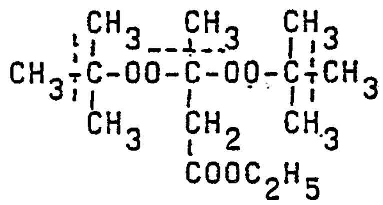
(X)

Es besteht deshalb grösstes Interesse an radikalischen Vernetzungsinitiatoren, die während der thermischen Zersetzung keine Methyl- oder Phenyl-Radikale bilden.

Aufgabe der Erfindung ist die Vernetzung von Brom und/oder Jod enthaltenden Fluorkautschuken mittels Vernetzungsinitiatoren, die während der thermischen Zersetzung keine Methyl- oder Phenyl-Radikale bilden und 10 Stunden-Halbwertszeit-Temperaturen über 80 °C aufweisen; die 10 Stunden-Halbwertszeit-Temperatur eines Initiators ist ungefähr gleichzusetzen mit seiner Anspringtemperatur. Wegen der Viskosität bzw. Zähigkeit von Fluorkautschuken und ihren Mischungen mit Füllstoffen sind zur Einarbeitung der Vernetzungsinitiatoren erhöhte Temperaturen erforderlich; zur Vermeidung von vorzeitiger Annetzung (= scorching) sind deshalb nur Vernetzungsinitiatoren mit 10 Stunden-Halbwertszeit-Temperaturen über 80 °C geeignet. Ungeeignet sind weiterhin Hydroperoxide und Peroxysäuren, die beide entweder gar keine oder nur ungenügende Vernetzung bewirken.

Di-t-amyl-, Di-t-octyl- und t-Amyl-t-octyl-peroxid sind drei Beispiele für Vernetzungsinitiatoren, die überraschenderweise befriedigende Vernetzung ergeben, 10 Stunden-Halbwertszeit-Temperaturen von über 80 °C haben und keine Benzoylperoxy-, t-Butylperoxy-, Cumylperoxy- oder andere Peroxid-Gruppen enthalten, welche während des thermischen Zerfalls Methyl- oder Phenyl-Radikale bilden, sondern deren thermischer Zerfall zu Ethyl- und/oder Neopentyl-Radikalen führt:

- Di-t-amyl-peroxid, das beim thermischen Zerfall Aceton und Ethyl-Radikale bildet:

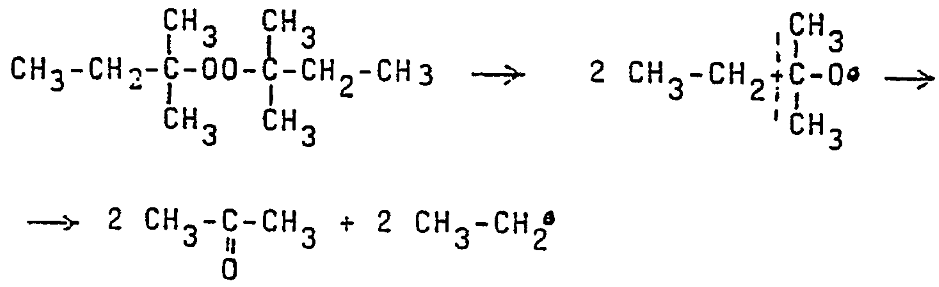

- Di-t-octyl-peroxid, das beim thermischen Zerfall Aceton und Neopentyl-Radikale bildet:

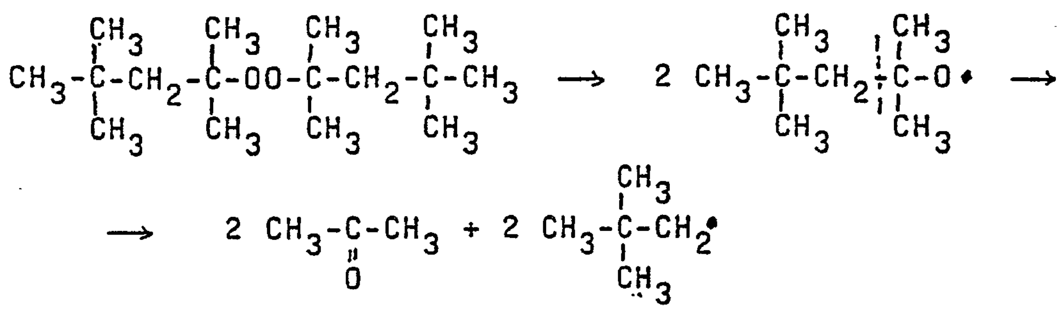

- t-Amyl-t-octyl-peroxid, das beim thermischen Zerfall Aceton, Ethyl-Radikale und Neopentyl-Radikale bildet.

Die erfindungsgemässe Aufgabe wird gelöst durch Verwendung von einem oder mehreren **Peroxiden** - (aus der Gruppe der t-Alkylperoxide, Peroxyketale und Peroxyester), die beim thermischen Zerfall keine Methyl- oder Phenyl-Radikale bilden und 10 Stunden-Halbwertszeit-Temperaturen über 80 °C aufweisen und die allgemeine Formel XI

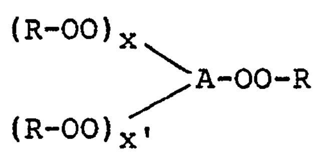

(XI)

haben, wobei bedeuten:

x und x' unabhängig voneinander 0 oder 1;

A =

i) t-Alkyl, t-Alkenyl oder t-Alkinyl mit jeweils 5 bis 20 C-Atomen (vorzugsweise 5 bis 12 C-Atomen),

ii) t-Alkdiyl, t-Alkendiyl oder t-Alkindiyl mit jeweils 8 bis 20 C-Atomen (vorzugsweise 8 bis 16 C-Atomen),

iii) t-Alktriyl, t-Alkentriyl oder t-Alkintriyl mit jeweils 12 bis 30 C-Atomen (vorzugsweise 12 bis 20 C-Atomen),

iv) Mono-, Di- oder Tri-alkyl-cycloalk-mono-, -di- oder -tri-yl mit 1 bis 10 C-Atomen (vorzugsweise 1 bis 4 C-Atomen + linear) im Alkylrest und 5 bis 12 C-Atomen (vorzugsweise 5 oder 6 C-Atomen) im Cycloalkylrest, mit der Massgabe, dass der Alkylrest und der Peroxyrest jeweils am gleichen Ringkohlenstoffatom gebunden sind,

wobei alle vorgenannten Reste durch Phenyl, OH oder Alkoxy mit 1 bis 6 C-Atomen substituiert sein können,

v) Cycloalk-1,1-diyl mit 5 bis 12 (vorzugsweise 5 oder 6) C-Atomen im Cycloalkylrest, der gegebenenfalls durch Phenyl, OH, $C_{1-6}$-Alkoxy oder 1 bis 3 $C_{1-6}$-Alkyl (vorzugsweise Methyl) substituiert sein kann,

vi) oder einen Rest der Formel

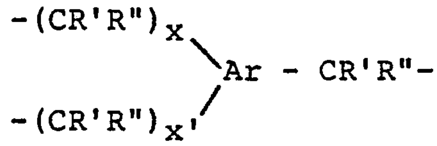,

worin R' einen Alkylrest mit 1 bis 10 C-Atomen (vorzugsweise 1 bis 5 C-Atomen + linear), R'' einen Alkylrest mit 2 bis 10 C-Atomen (vorzugsweise 2 bis 5 C-Atomen + linear) und Ar einen gegebenenfalls durch ein oder mehrere $C_1$-$C_3$-Alkyl- oder -Alkoxy-Reste (vorzugsweise einen Methylrest) substituierten Arylrest (vorzugsweise einen Benzol- oder Naphthalin-Rest), bedeuten und
mit der Massgabe, dass x in $(R\text{-}OO)_x$- und in $-(CR'R'')_x$- dieselbe Bedeutung hat und x' in $(R\text{-}OO)_{x'}$- und in $-(CR'R'')_{x'}$- dieselbe Bedeutung hat;

R =

i) t-Alkyl, t-Alkenyl oder t-Alkinyl mit 5 bis 20 C-Atomen (vorzugsweise 5 bis 12 C-Atomen) oder, falls x und/oder x' = 1, können zwei R zusammengenommen t-Alkdiyl, t-Alkendiyl oder t-Alkindiyl mit 8 bis 20 C-Atomen (vorzugsweise 8 bis 16 C-Atomen) bedeuten,
ii) Alkyl-cycloalkyl, oder, falls x und/oder x' = 1, können zwei R zusammengenommen Dialkylcycloalkdiyl, mit 1 bis 10 (vorzugsweise 1 bis 4) C-Atomen im Alkylrest und 5 bis 12 (vorzugsweise 5 oder 6) C-Atomen im Cycloalkylrest bedeuten, mit der Massgabe, dass der Alkylrest an das gleiche Ringkohlenstoffatom gebunden ist wie der Peroxyrest von A,
wobei vorgenannte Reste durch Phenyl, OH oder Alkoxy mit 1 bis 6 C-Atomen substituiert sein können,
iii) oder einen Rest der Formel

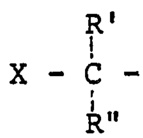,

wobei X Alkyl, Alkenyl oder Alkinyl mit 2 bis 8 C-Atomen oder gegebenenfalls wie oben angegeben substituiertes Ar oder Cycloalkyl bedeutet und R' und R'' die oben angegebenen Bedeutungen haben,
iv) oder, falls x und/oder x' = 1, können zwei R zusammengenommen einen Rest der Formel

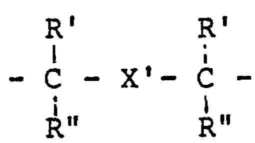

oder einen Rest der Formel

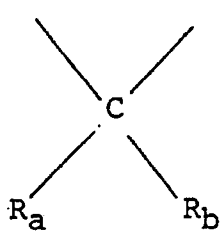

bedeuten, wobei X' Alkdiyl, Alkendiyl oder Alkindiyl mit 2 bis 8 C-Atomen oder gegebenenfalls wie oben angegeben substituiertes Ar oder Cycloalkdiyl bedeutet, R' und R'' die oben angegebenen Bedeutungen haben und $R_a$ und $R_b$ gleich oder verschieden sein können und Alkyl, Alkenyl oder Alkinyl mit 2 bis 10 Kohlenstoffatomen (vorzugsweise 2 bis 5 Kohlenstoffatomen) oder einen Rest der Formel $-R_c\text{-}COOR_d$ bedeuten, wobei $R_c$ Alkdiyl mit 1 bis 10 C-Atomen (vorzugsweise 1 bis 5 C-Atomen) und $R_d$ Alkyl mit 1 bis 10 C-Atomen (vorzugsweise 1 bis 5 C-Atomen), Phenyl oder mit $C_1$-$C_4$-Alkyl substituiertes Phenyl

sein kann, oder $R_a$ und $R_b$ bevorzugt zusammen mit dem C-Atom, an das sie gebunden sind, einen Ring mit insgesamt 5 bis 12 (vorzugsweise 5 oder 6) C-Atomen bilden, wobei vorgenannte Reste $R_a$ und $R_b$ sowie der durch $R_a$ und $R_b$ zusammen mit dem C-Atom, an das sie gebunden sind, gebildete Ring durch $C_1$-$C_4$-Alkyl, $C_1$-$C_4$-Alkoxy, Phenyl oder OH substituiert sein können,

v) oder einen Rest der Formel

$$R_e - \overset{\overset{\displaystyle O}{\|}}{C} -$$

vi) oder, falls x und/oder x' = 1, können zwei R zusammengenommen einen Rest der Formel

$$- \overset{\overset{\displaystyle O}{\|}}{C} - R_f - \overset{\overset{\displaystyle O}{\|}}{C} -$$

bedeuten, wobei $R_e$ gegebenenfalls durch $C_1$-$C_3$-Alkoxy substituiertes Alkyl, Alkenyl oder Alkinyl mit 2 bis 20 C-Atomen, gegebenenfalls durch $C_1$-$C_3$-Alkyl oder -Alkoxy substituiertes Cycloalkyl mit 5 bis 12 C-Atomen oder durch $C_1$-$C_{10}$ (vorzugsweise $C_1$-$C_5$)-Alkyl, -Alkoxy, $C_1$-$C_{18}$ (vorzugsweise $C_1$-$C_{12}$)-Alkylcarbonyl oder -Alkoxycarbonyl substituiertes Phenyl oder Naphthyl und wobei $R_f$ gegebenenfalls durch $C_1$-$C_{16}$-Alkyl, $C_2$-$C_{16}$-Alkenyl oder $C_1$-$C_3$-Alkoxy substituiertes Alkdiyl, Alkendiyl oder Alkindiyl mit 2 bis 20 C-Atomen, gegebenenfalls durch $C_1$-$C_3$-Alkyl oder -Alkoxy substituiertes Cycloalkdiyl mit 5 bis 12 C-Atomen oder durch $C_1$-$C_{10}$ (vorzugsweise $C_1$-$C_5$)-Alkyl, -Alkoxy, $C_1$-$C_{10}$ (vorzugsweise $C_1$-$C_5$)-Alkylcarbonyl oder -Alkoxycarbonyl substituiertes Phenylen oder Naphthylen bedeuten;

oder der allgemeinen Formel XII

$$Y(-\overset{\overset{\displaystyle O}{\|}}{C}-OOR^7)_y \qquad (XII),$$

worin bedeuten:

Y =

Alkdiyl, Alkendiyl oder Alkindiyl mit 2 bis 20 (vorzugsweise 2 bis 16) C-Atomen,

Alktriyl, Alkentriyl oder Alkintriyl mit 2 bis 20 (vorzugsweise 2 bis 16) C-Atomen,

gegebenenfalls durch $C_1$-$C_3$-Alkyl oder -Alkoxy substituiertes Cycloalkdiyl, -triyl oder -tetryl mit 5 bis 12 (vorzugsweise 5 oder 6) C-Atomen,

oder ein, durch mindestens eine $C_1$-$C_3$-Alkyl- oder -Alkoxy-Gruppe substituierter Benzolrest oder Naphthalinrest,

y =

die Zahlen 2, 3 oder 4 und

$R^7$ =

gleich oder verschieden und = R i), R ii) oder R iii) (nicht aber R iv), R v), R vi));

oder der allgemeinen Formel XIII

$$(R'''O-\overset{\overset{\displaystyle O}{\|}}{C})-Z(-\overset{\overset{\displaystyle O}{\|}}{C}-OOR^7)_z \qquad (XIII),$$

worin Z einen Benzolrest oder einen Naphthalinrest bedeutet, z die Zahlen 2 oder 3 bedeutet, R''' einen Alkylrest mit 1 bis 18 C-Atomen bedeutet und $R^7$ die Bedeutung von R i), R ii) und R iii) (nicht aber von R iv), R v) und R vi)) hat;

oder ein dimeres oder polymeres Umsetzungsprodukt XIV einer Dicarbonsäure der Formel HOOC-$R_f$-COOH und eines Dihydroperoxids der Formel HOO-V-OOH mit einem Polymerisationsgrad von vorzugsweise bis

30, insbesondere bis 20, worin $R_f$ die oben angegebene Bedeutung hat und V bedeutet

i) gegebenenfalls durch Carboxy oder $C_{1-4}$-Alkoxycarbonyl substituiertes t-Alkdiyl, t-Alkendiyl oder t-Alkindiyl mit 4 bis 20 C-Atomen (vorzugsweise 4 bis 12 C-Atomen),

ii) gegebenenfalls durch Carboxy oder $C_{1-4}$-Alkoxycarbonyl substituiertes Dialkylcycloalkdiyl mit 1 bis 10 (vorzugsweise 1 bis 4) C-Atomen im Alkylrest und 5 bis 12 (vorzugsweise 5 oder 6) C-Atomen im Cycloalkylrest, mit der Massgabe, dass dar Alkylrest an dem gleichen Ringkohlenstoffatom gebunden ist wie der Peroxy- oder Carboxylrest,

iii) oder einen Rest der Formel

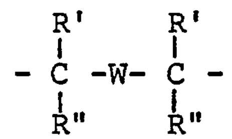

,

worin R' und R" die oben angegebenen Bedeutungen haben und W gegebenenfalls durch $C_1$-$C_3$-Alkyl oder -Alkoxy substituiertes Cycloalkdiyl mit 5 bis 12 (vorzugsweise 5 oder 6) C-Atomen, Phenylen oder Naphthylen bedeutet;

und/oder

einem oder mehreren **Azo-estern** der allgemeinen Formel XV

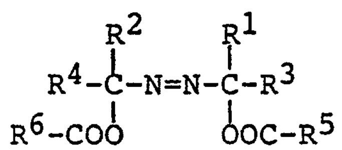

(XV)

worin $R^1$, $R^2$, $R^3$ und $R^4$ gleich oder verschieden sein können und $C_{1-10}$-Alkyl oder $C_{5-6}$-Cycloalkyl bedeuten; $R^5$ und $R^6$ gleich oder verschieden sein können und H, $C_{1-10}$-Alkyl, $C_{5-6}$-Cycloalkyl, Phenyl oder Phenyl-$C_{1-10}$-alkyl bedeuten, wobei die genannten Reste $R^1$-$R^6$ gegebenenfalls Methylgruppen, $C_{2-10}$-Alkylketten, Phenyl oder Phenyl-$C_{1-10}$-alkyl als Substituenten enthalten können; oder worin $R^2$ und $R^4$ und/oder $R^1$ und $R^3$ jeweils zusammen mit dem C-Atom, an das sie gebunden sind, $C_{5-12}$ -(vorzugsweise $C_{5-6}$)-Cycloalk-1,1-diyl bedeuten, das gegebenenfalls durch ein oder mehrere (vorzugsweise 1 bis 3) Methyl- oder $C_{2-10}$-Alkylgruppen substituiert sein kann, oder worin $R^4$ und $R^6$ und/oder $R^3$ und $R^5$ unabhängig voneinander jeweils zusammen $-CH_2-CH_2-$ oder $-CH_2-CH_2-CH_2-$bedeuten, die gegebenenfalls durch ein oder mehrere (vorzugsweise 1 bis 3) Methyl- oder $C_{2-10}$-Alkylgruppen substituiert sein können.

Bevorzugt sind Peroxide der allgemeinen Formel XI, wobei bedeuten:

x' 0 und x 0 oder 1;

A =

i) gegebenenfalls durch OH substituiertes t-Alkyl, t-Alkenyl oder t-Alkinyl mit jeweils 5 bis 8 C-Atomen (besonders bevorzugt t-Amyl, t-Octyl und 2-Methyl-4-hydroxy-pent-2-yl),

ii) gegebenenfalls durch OH substituiertes t-Alkdiyl, t-Alkendiyl oder t-Alkindiyl mit jeweils 8 bis 10 C-Atomen (besonders bevorzugt 2,5-Dimethylhex-2,5-diyl, 2,5-Dimethylhex-3-en-2,5-diyl und 2,5-Dimethylhex-3-in-2,5-diyl),

iii) gegebenenfalls durch 1 bis 3 Methyl substituiertes Cyclohex-1,1-diyl (besonders bevorzugt Cyclohex-1,1-diyl und 3,3,5-Trimethylcyclohex-1,1-diyl),

iv) oder einen Rest der Formel

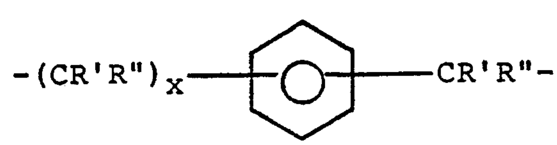

,

worin R' einen Alkylrest mit 1 bis 3 C-Atomen, und R" einen Alkylrest mit 2 oder 3 C-Atomen bedeuten (besonders bevorzugt

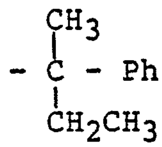 , 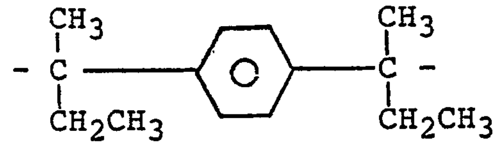 und

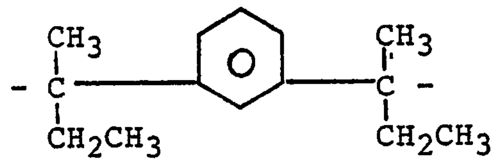 ) und

mit der Massgabe, dass x in $(R\text{-}OO)_x$- und in $-(CR'R'')_x$- dieselbe Bedeutung hat;

R =

i) gegebenenfalls durch OH substituiertes t-Alkyl, t-Alkenyl oder t-Alkinyl mit 5 bis 8 C-Atomen (besonders bevorzugt t-Amyl, t-Octyl und 2-Methyl-4-hydroxy-pent-2-yl) oder, falls x = 1, können zwei R zusammengenommen t-Alkdiyl, t-Alkendiyl oder t-Alkindiyl mit 8 bis 10 C-Atomen bedeuten (besonders bevorzugt 2,5-Dimethylhex-2,5-diyl, 2,5-Dimethylhex-3-en-2,5-diyl und 2,5-Dimethylhex-3-in-2,5-diyl),

ii) oder einen Rest der Formel

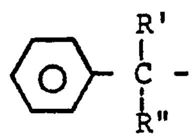 ,

wobei R' einen Alkylrest mit 1 bis 3 C-Atomen und R" einen Alkylrest mit 2 oder 3 C-Atomen bedeuten (besonders bevorzugt

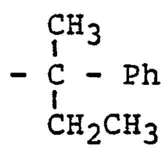 ),

iii) oder einen Rest der Formel

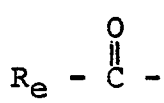

wobei $R_e$ gerades oder verzweigtes Alkyl mit 2 bis 10 C-Atomen (besonders bevorzugt 2,4,4-Trimethylpent-1-yl und Non-1-yl), oder durch Methyl oder $C_1$-$C_{12}$-Alkoxycarbonyl substituiertes Phenyl (besonders bevorzugt o-Methylphenyl, p-Methylphenyl, o-Methoxycarbonylphenyl, p-Methoxycarbonylphenyl, Ethoxy-, Propoxy-, Hexoxy-, Decoxy- und Dodecoxycarbonylphenyl) bedeutet.

Bevorzugt sind Peroxide der allgemeinen Formel XII, wobei bedeuten:

Y =

Alkdiyl, Alkendiyl oder Alkindiyl mit 2 bis 16 C-Atomen (besonders bevorzugt Heptdiyl und Octdiyl) oder einen, durch eine $C_1$-$C_3$-Alkyl- oder -Alkoxy-Gruppe substituierten Benzolrest,

y =

2 und

$R^7$ =

t-Alkyl, t-Alkenyl oder t-Alkinyl mit 5 bis 8 C-Atomen (besonders bevorzugt t-Amyl) oder einen Rest der Formel

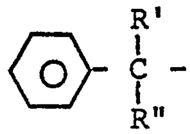 ,

wobei R' einen Alkylrest mit 1 bis 3 C-Atomen und R" einen Alkylrest mit 2 oder 3 C-Atomen bedeuten (besonders bevorzugt

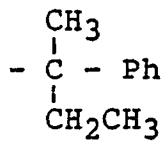 ).

Bevorzugt sind Peroxide der allgemeinen Formel XIII, wobei bedeuten:

Z

einen Benzolrest,

z

2

R'''

einen Alkylrest mit 1 bis 18 C-Atomen (besonders bevorzugt n-Decyl, Isodecyl, n-Dodecyl = Lauryl, n-Tetradecyl = Myristyl, n-Hexadecyl = Palmityl und n-Octadecyl = Stearyl) und

$R^7$

t-Alkyl, t-Alkenyl oder t-Alkinyl mit 5 bis 8 C-Atomen (besonders bevorzugt t-Amyl).

Bevorzugt sind Peroxide der allgemeinen Formel XIV mit einem Polymerisationsgrad von bis 20, wobei bedeuten:

$R_f$

gegebenenfalls durch $C_1$-$C_3$-Alkyl, $C_2$-$C_4$-Alkenyl oder $C_1$-$C_3$-Alkoxy substituiertes Alkdiyl, Alkendiyl oder Alkindiyl mit 2 bis 6 C-Atomen oder durch $C_1$-$C_3$-Alkyl, -Alkoxy, $C_1$-$C_3$-Alkylcarbonyl oder -Alkoxycarbonyl substituiertes Phenyl und

V

i) gegebenenfalls durch Carboxy oder Methoxycarbonyl substituiertes t-Alkdiyl, t-Alkendiyl oder t-Alkindiyl mit 4 bis 8 C-Atomen

ii) oder einen Rest der Formel

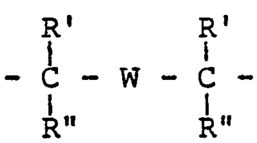 ,

wobei R' einen Alkylrest mit 1 bis 3 C-Atomen, R" einen Alkylrest mit 2 oder 3 C-Atomen und W Phenylen bedeuten (besonders bevorzugt

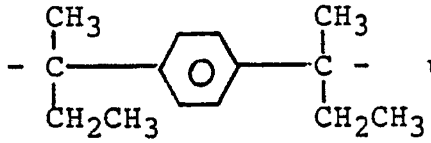 und 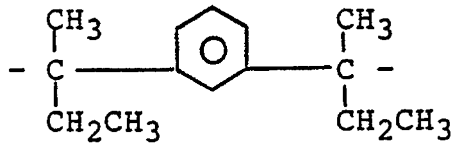 ).

Bevorzugt sind Azoester der allgemeinen Formel XV, worin $R^1$, $R^2$, $R^3$ und $R^4$ gleich oder verschieden sein können und $C_{1-4}$-Alkyl (besonders bevorzugt Methyl, Ethyl und 2-Methylprop-1-yl) bedeuten; $R^5$ und $R^6$ gleich oder verschieden sein können und H, Methyl oder Ethyl bedeuten; oder worin $R^2$ und $R^4$ und/oder $R^1$ und $R^3$ jeweils zusammen mit dem C-Atom, an das sie gebunden sind, Cyclohexdiyl bedeuten, oder worin $R^4$ und $R^6$ und/oder $R^3$ und $R^5$ unabhängig voneinander jeweils zusammen $-CH_2-CH_2-$ oder $-CH_2-$

$CH_2$-$CH_2$- bedeuten.

Weitere Beispiele für geeignete Peroxide neben den bereits genannten drei Peroxiden, die 10 Stunden-Halbswertszeit-Temperaturen über 80° C aufweisen und keine Methyl-Radikale oder/und Phenyl-Radikale bilden, sind:
(Der angegebene Zerfallsmechanismus für die drei oben genannten Beispiele Di-t-amyl-peroxid, Di-t-octyl-peroxid und t-Amyl-t-octyl-peroxid sowie für die folgenden Beispiele ist in J. H. Elson und J. K. Kochi, J. Org. Chem. 39, Seiten 2091 bis 2096 (1974) beschrieben.)

- "Dihexylenglycolperoxid" (=Bis(2-methyl-4-hydroxy-pentyl-(2))-peroxid), aus dem beim thermischen Zerfall Aceton und 2-Hydroxypropyl-Radikale entstehen:

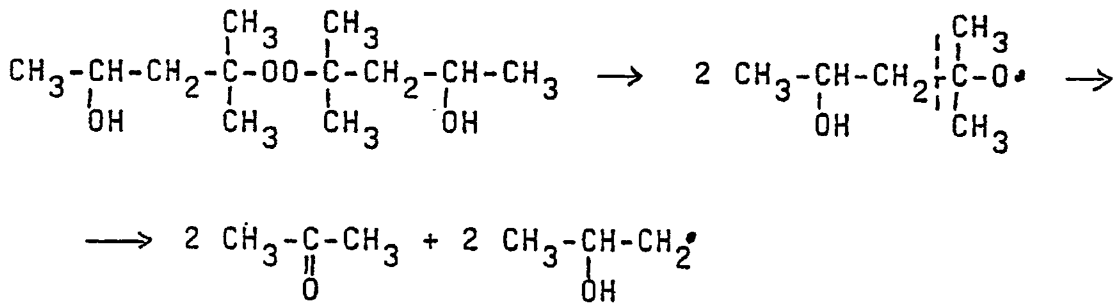

- t-Amyl-(2-methyl-4-hydroxy-pentyl-(2))-peroxid, das beim thermischen Zerfall Aceton, Ethyl-Radikale und 2-Hydroxypropyl-Radikale bildet.
- 2,5-Bis(t-amylperoxy)-2,5-dimethyl-hexan, aus dem beim thermischen Zerfall Aceton, Ethyl-Radikale und Ethan-Diradikale entstehen:

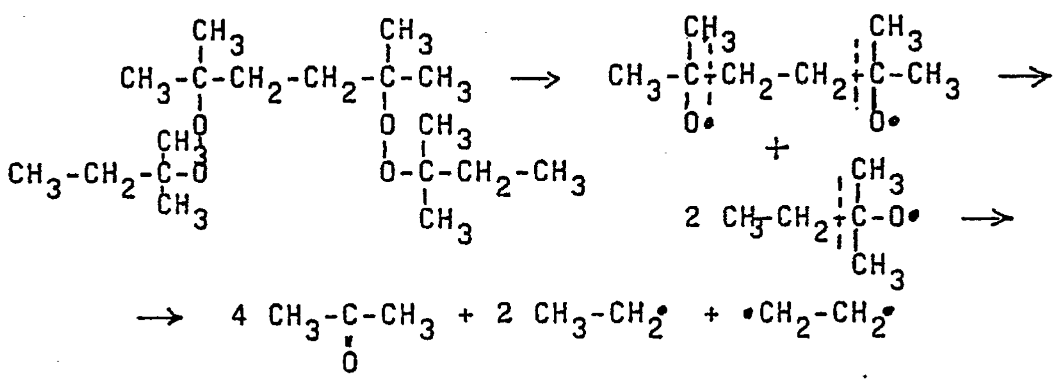

- 3,3,6,6,9,9,12,12-Octamethyl-1,2,7,8-tetraoxa-cyclododecan, aus dem bei der thermischen Zersetzung Aceton und Ethan-Diradikale entstehen:

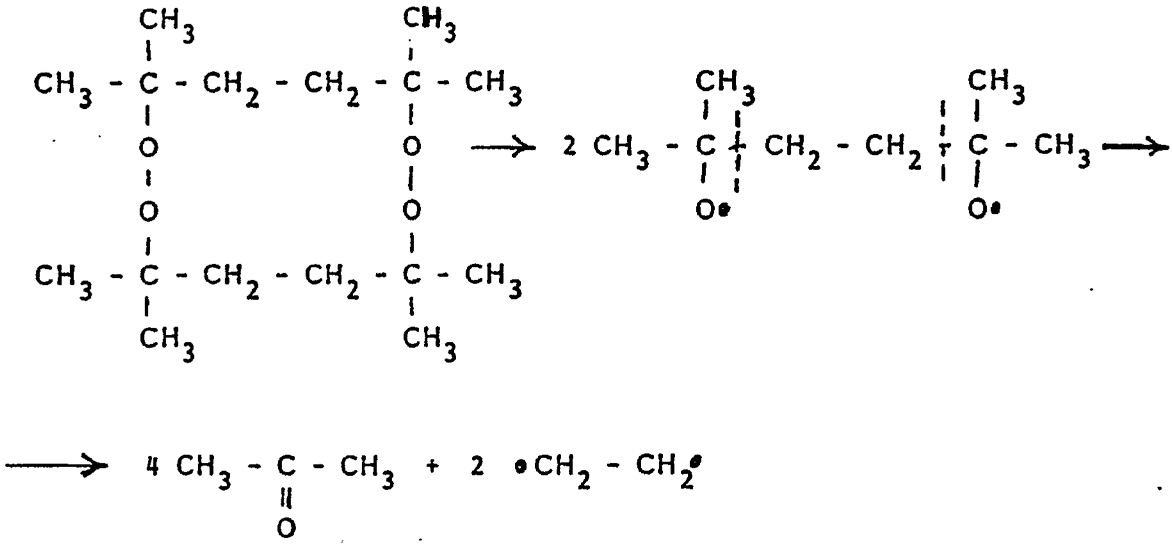

- 3,3,6,6,9,9,12,12-Octamethyl-1,2,7,8-tetraoxa-cyclododecadien-(4,10), das bei der thermischen Zersetzung Aceton und Ethylen-Diradikale bildet:

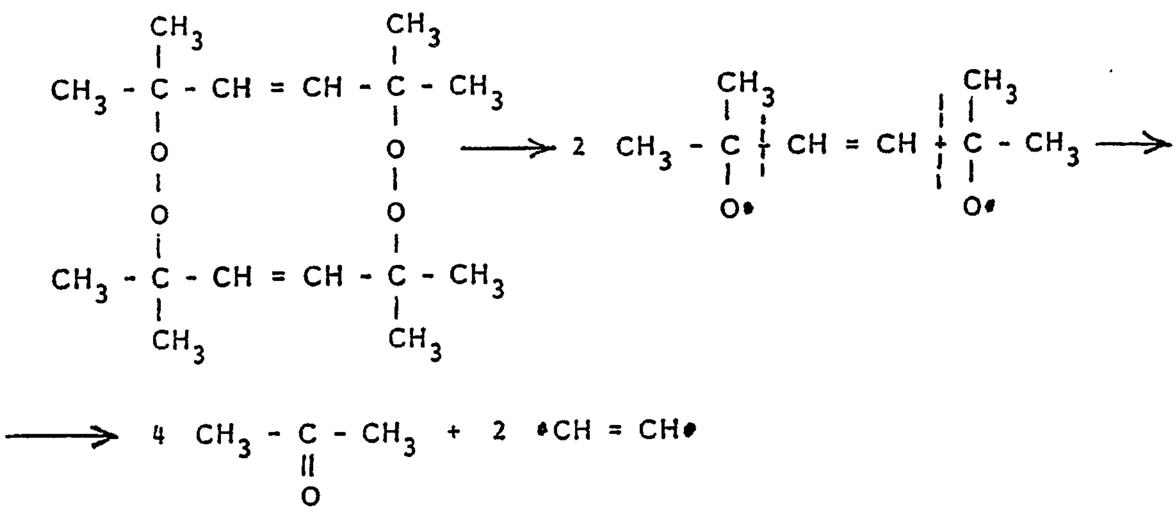

- 3,3,6,6,9,9,12,12-Octamethyl-1,2,7,8-tetraoxa-cyclododecadiin-(4,10), aus dem bei der thermischen Zersetzung Aceton und Acetylen-Diradikale entstehen:

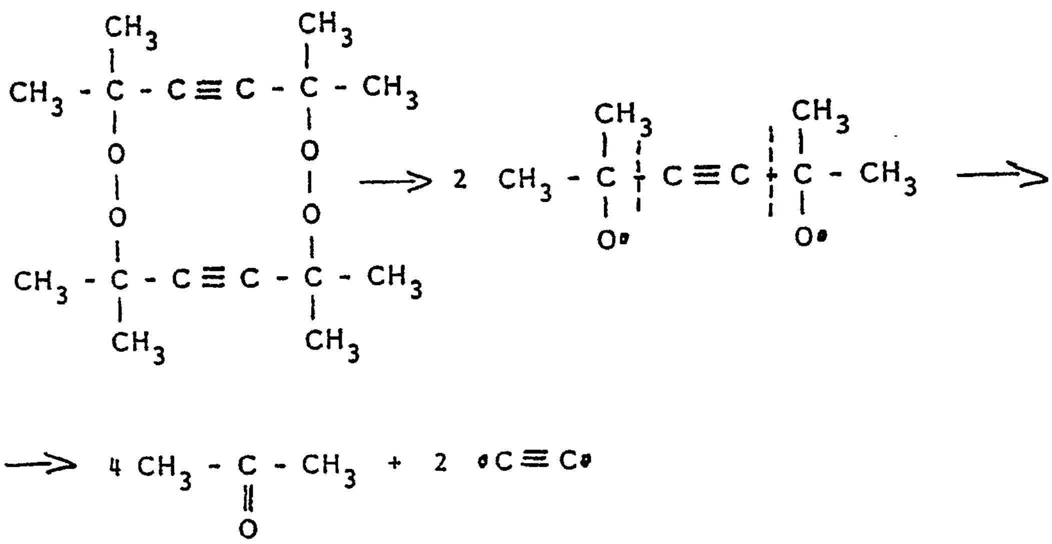

- 2,5-Bis(t-amylperoxy)-2,5-dimethyl-hexin-(3), das bei der thermischen Zersetzung Aceton und Ethyl-Radikale bildet.
- Bis(sec-butylbenzol)-peroxid, das bei der thermischen Zersetzung Acetophenon und Ethyl-Radikale bildet:

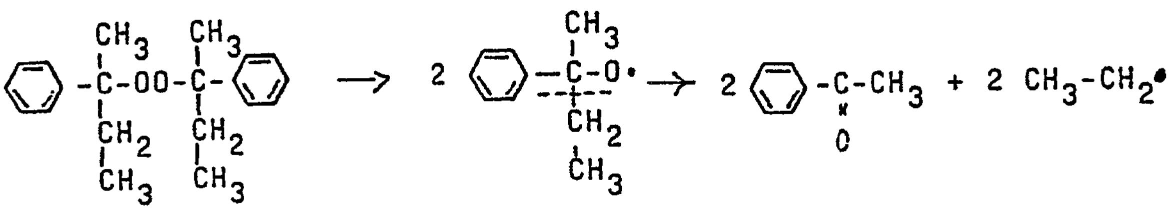

- t-Amyl-sec-butylbenzol-peroxid, aus dem bei der thermischen Zersetzung Aceton, Acetophenon und Ethyl-Radikale entstehen:

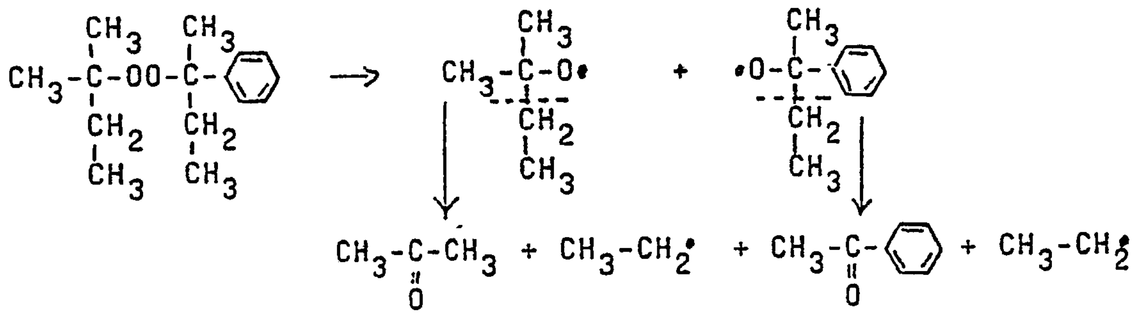

- 1,1-Bis(t-amylperoxy)-cyclohexan, das bei der thermischen Zersetzung Aceton, Ethyl-Radikale und Pentan-Diradikale bildet:

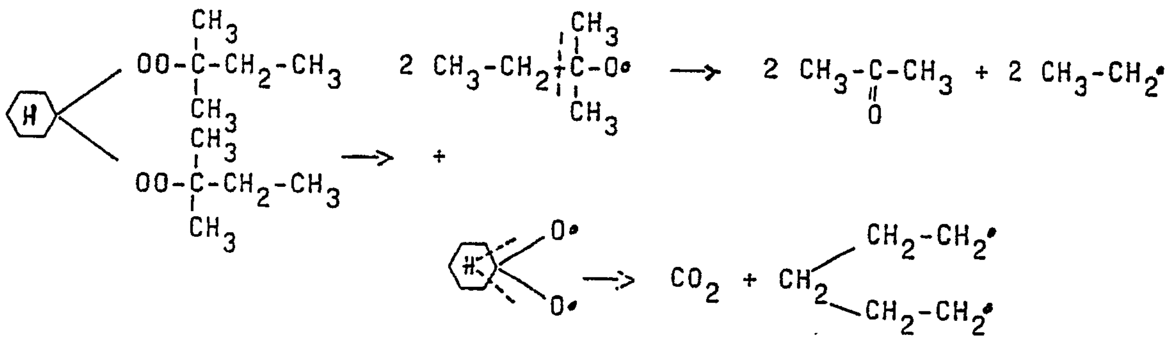

- 1,1-Bis(t-amylperoxy)-3,3,5-trimethylcyclohexan, aus dem bei der thermischen Zersetzung Aceton, Ethyl-Radikale und 2,2,4-Trimethylpentan-Diradikale entstehen:

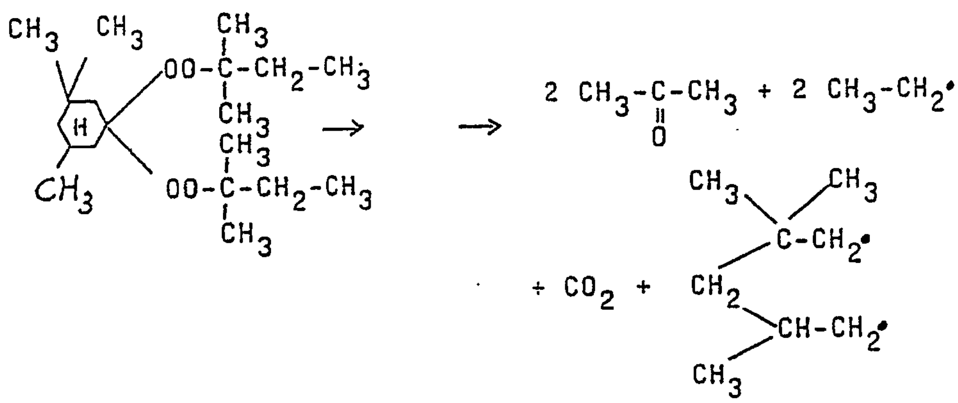

- Perketal der Formel XVI, das bei der thermischen Zersetzung Aceton, Ethan-Diradikale und Pentan-Diradikale bildet:

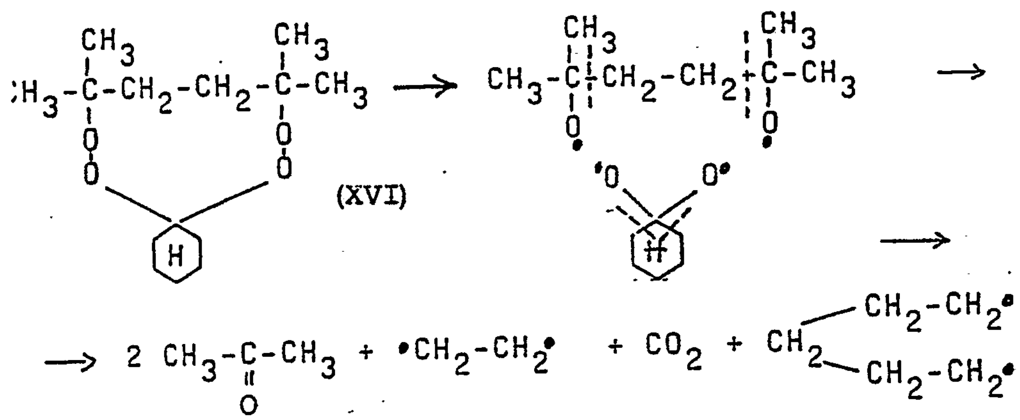

(XVI)

- Perketal der Formel XVII, aus dem bei der thermischen Zersetzung Aceton, Ethan-Diradikale und 2,2,4-Trimethylpentan-Diradikale entstehen:

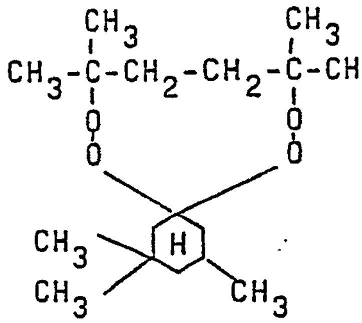

(XVII)

- Perketale der Formeln XVIII und XIX, die bei der thermischen Zersetzung Aceton und Pentan-Diradikale bzw. Aceton und 2,2,4-Trimethylpentan-Diradikale bilden:

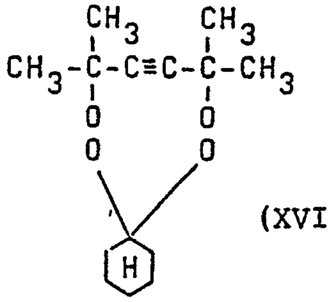

(XVIII)

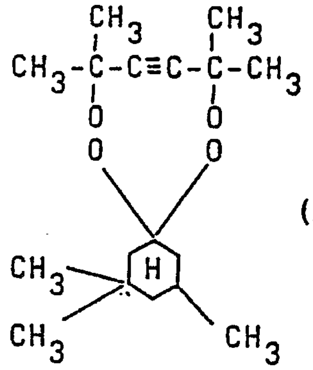

(XIX)

- 1,3- oder 1,4-Bis(2-t-amylperoxy-butyl-(2))-benzol, aus dem bei der thermischen Zersetzung Aceton, 1,3- bzw. 1,4-Diacetylbenzol und Ethyl-Radikale entstehen:

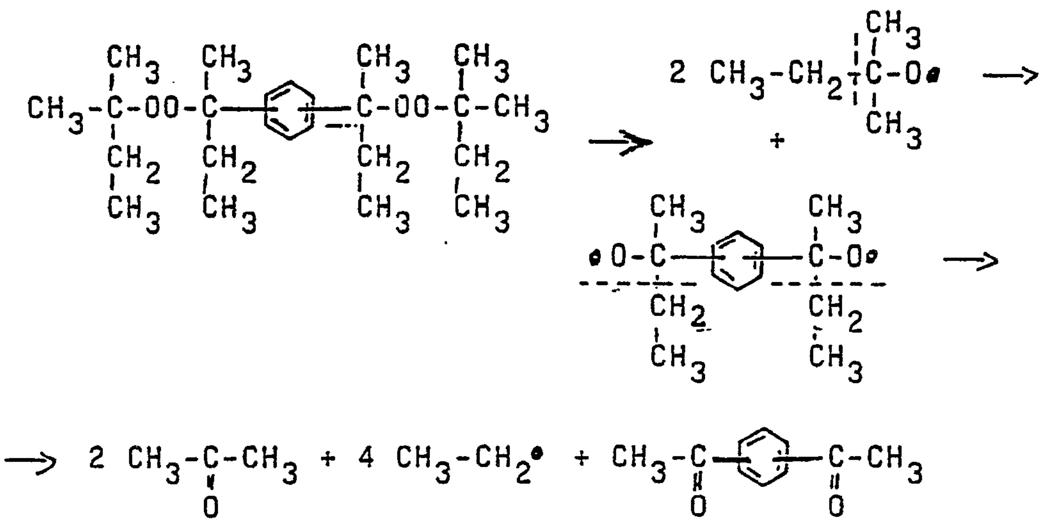

- 1,3- oder 1,4-Bis(sec-butylbenzolperoxy-butyl-(2))-benzol, aus dem bei der thermischen Zersetzung Acetophenon, 1,3- bzw. 1,4-Diacetylbenzol und Ethyl-Radikale entstehen:

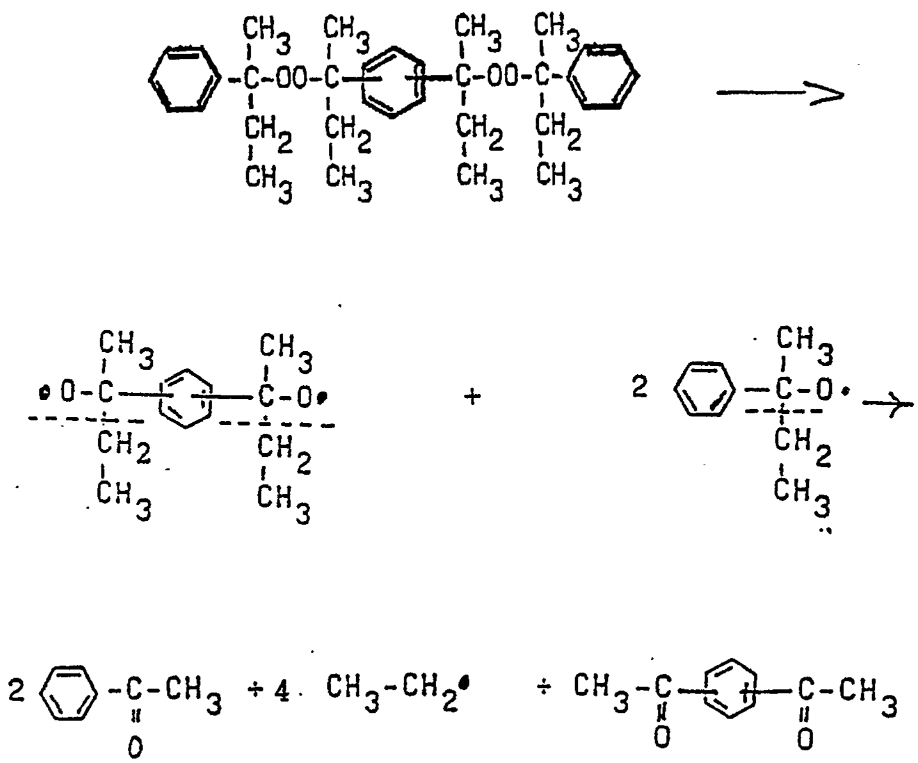

- t-Amylperoxy-3,5,5-trimethyl-hexanoat, aus dem bei der thermischen Zersetzung Aceton, Ethyl-Radikale und 2,4,4-Trimethylpentyl-Radikale entstehen:

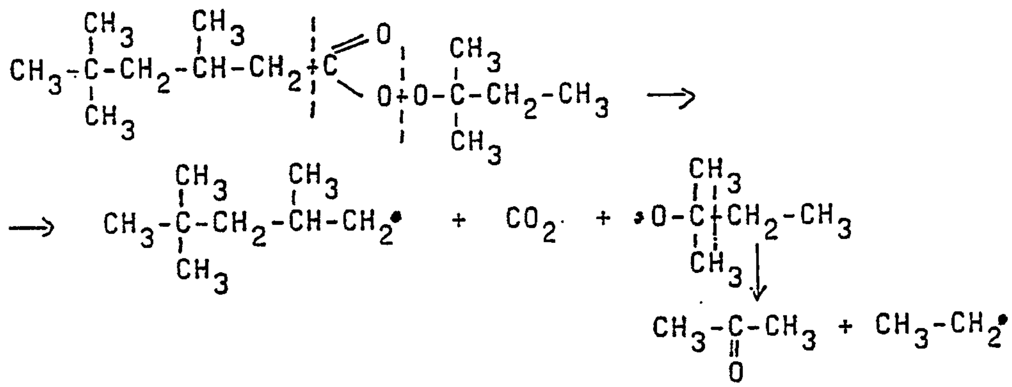

- t-Amylperoxy-decanoat, das bei der thermischen Zersetzung Aceton, Ethyl-Radikale und n-Nonyl-Radikale bildet:

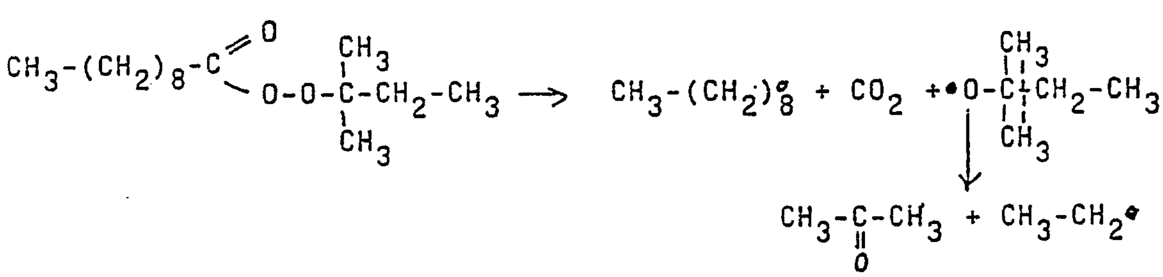

- Alkyl-t-amylperoxy-phthalate, die bei der thermischen Zersetzung Aceton, Ethyl-Radikale und Alkylbenzoesäureester-Radikale bilden:
(N = Methyl, Ethyl, Propyl, Hexyl, Decyl, Dodecyl)

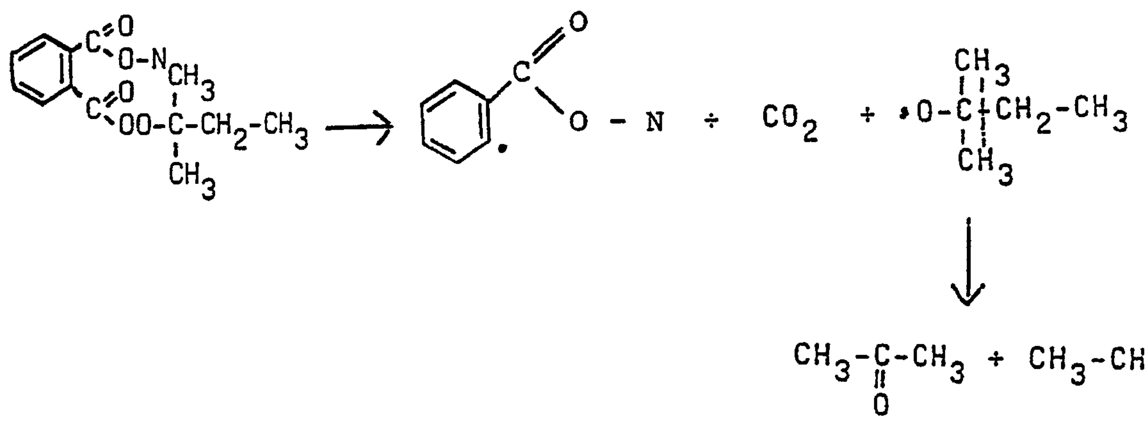

- 2,5-Dimethyl-2,5-bis(isononanoylperoxy)-hexan, das bei der thermischen Zersetzung Aceton, Ethan-Diradikale, $CO_2$ und 2,4,4-Trimethylpentyl-Radikale bildet:

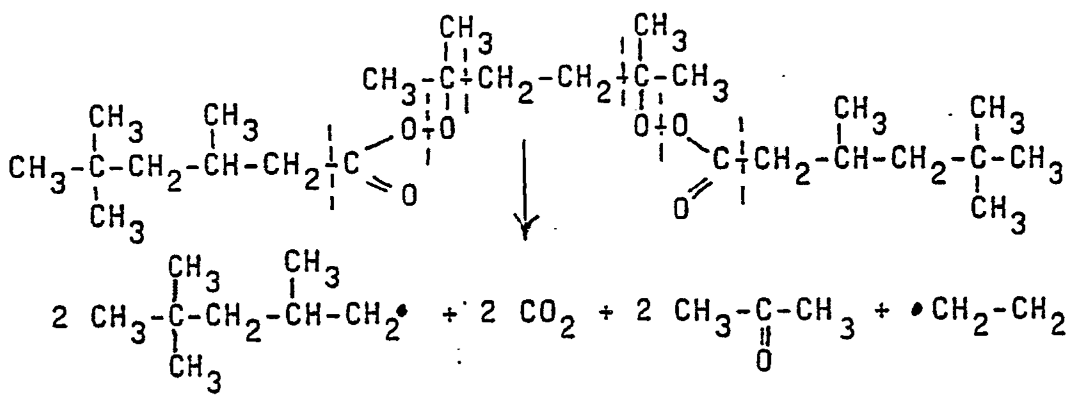

- 2,5-Dimethyl-2,5-bis(sec-butylbenzolperoxy)-hexan, aus dem bei der thermischen Zersetzung Aceton, Acetophenon, Ethyl-Radikale und Ethan-Diradikale entstehen:

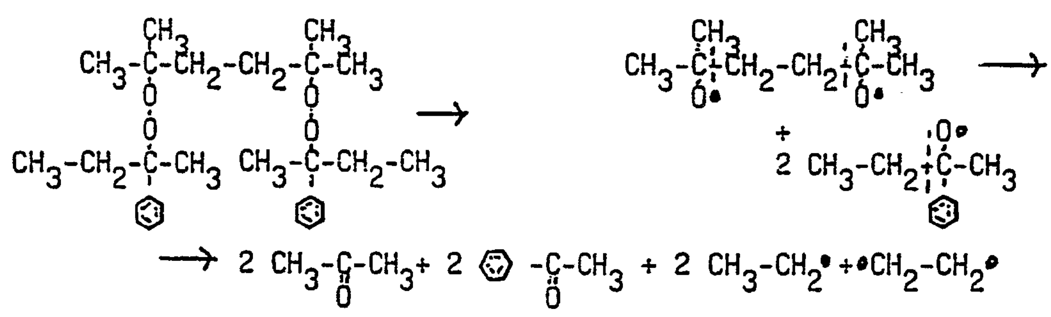

- 2,5-Dimethyl-2,5-bis(o-methylbenzoylperoxy)-hexan, aus dem bei der thermischen Zersetzung Aceton, Tolyl-Radikale und Ethan-Diradikale entstehen:

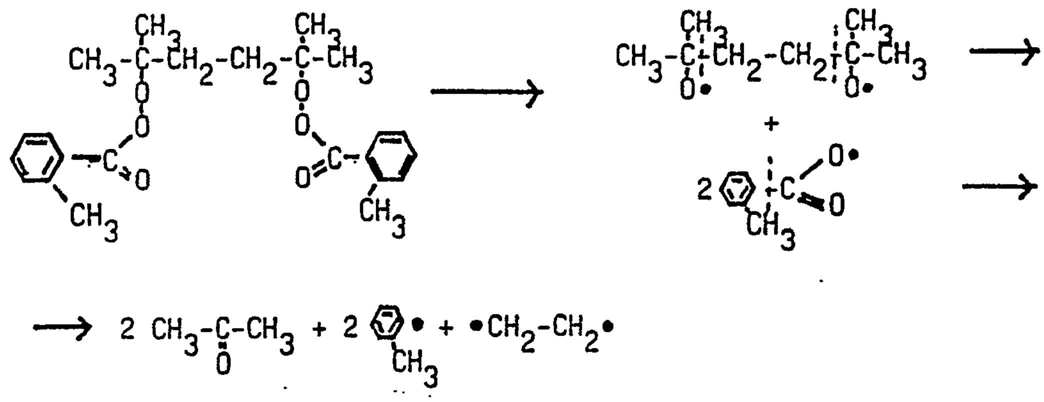

- 2,5-Dimethyl-2,5-bis(p-methylbenzoylperoxy)-hexan, aus dem bei der thermischen Zersetzung Aceton, Tolyl-Radikale und Ethan-Diradikale entstehen:

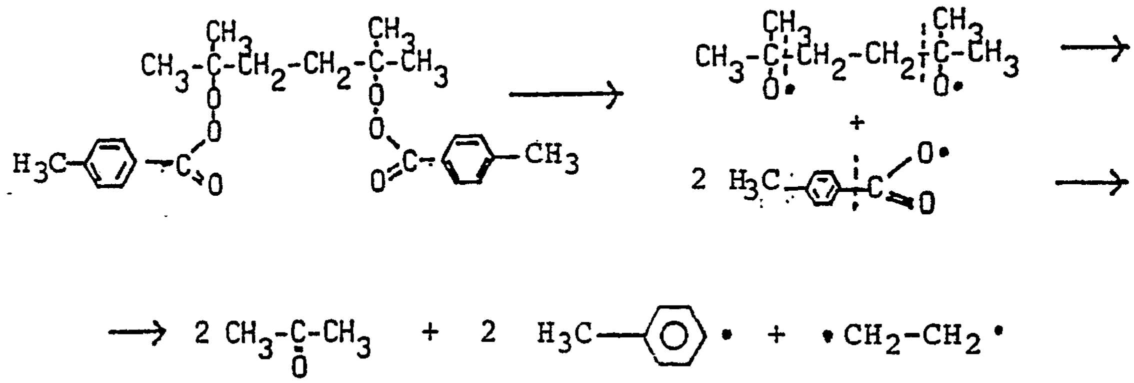

- t-Amylperoxy-o-methylbenzoat, aus dem bei der thermischen Zersetzung Aceton, Tolyl-Radikale und Ethyl-Radikale entstehen:

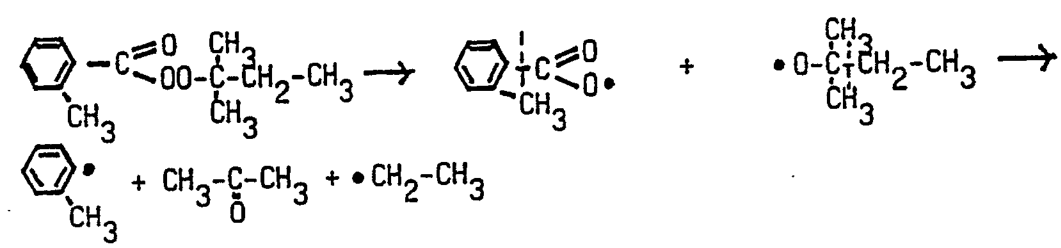

- t-Amylperoxy-p-methylbenzoat, aus dem bei der thermischen Zersetzung Aceton, Tolyl-Radikale und Ethyl-Radikale entstehen:

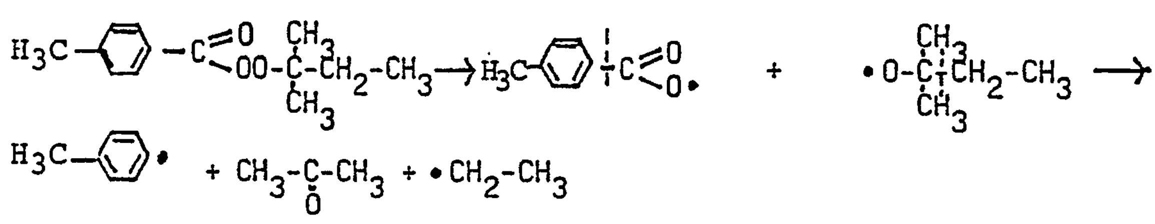

- t-Amlyperoxy-o-methoxycarbonylbenzoat, aus dem bei der thermischen Zersetzung Aceton, o-Methoxycarbonylphenyl-Radikale und Ethyl-Radikale entstehen:

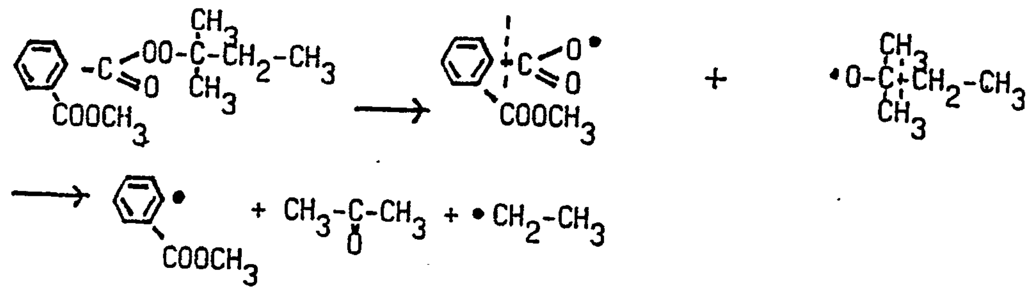

- a) Di(t-amyl)-diperoxyazelat (n = 7) und
  b) Di(t-amyl)-diperoxysebacat (n = 8),
  die bei der thermischen Zersetzung Aceton, Ethyl-Radikale und Heptan- bzw. Octan-Diradikale bilden:

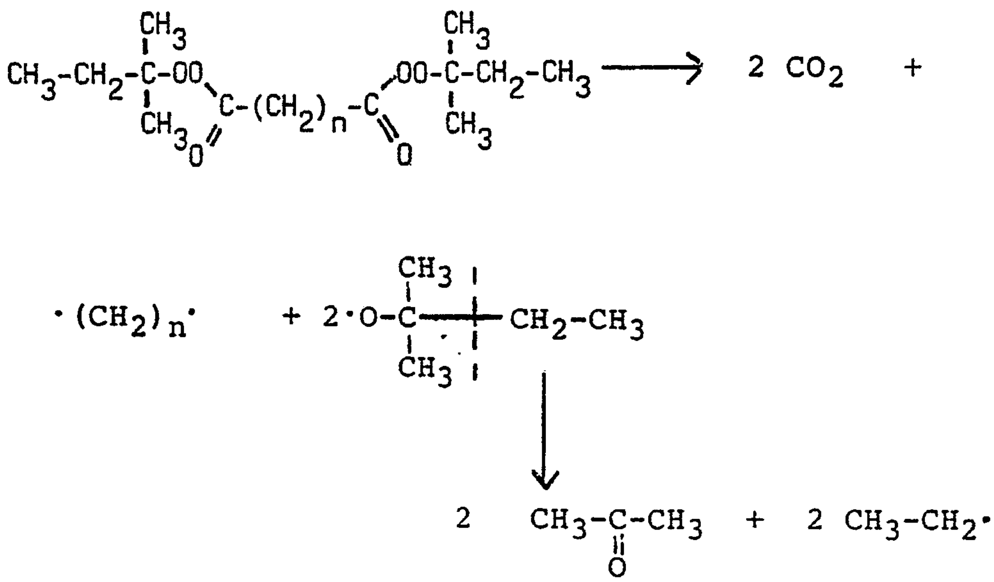

- Alkyl-di-t-amyl-di-peroxy-benzoltricarbonsäureester, die bei der thermischen Zersetzung Aceton, Ethyl-Radikale und Alkyl-benzoesäureester-Diradikale bilden:
  (M = n-Decyl, Isodecyl, n-Dodecyl (= Lauryl), n-Tetradecyl (= Myristyl), n-Hexadecyl (= Palmityl), n-Octadecyl (= Stearyl))

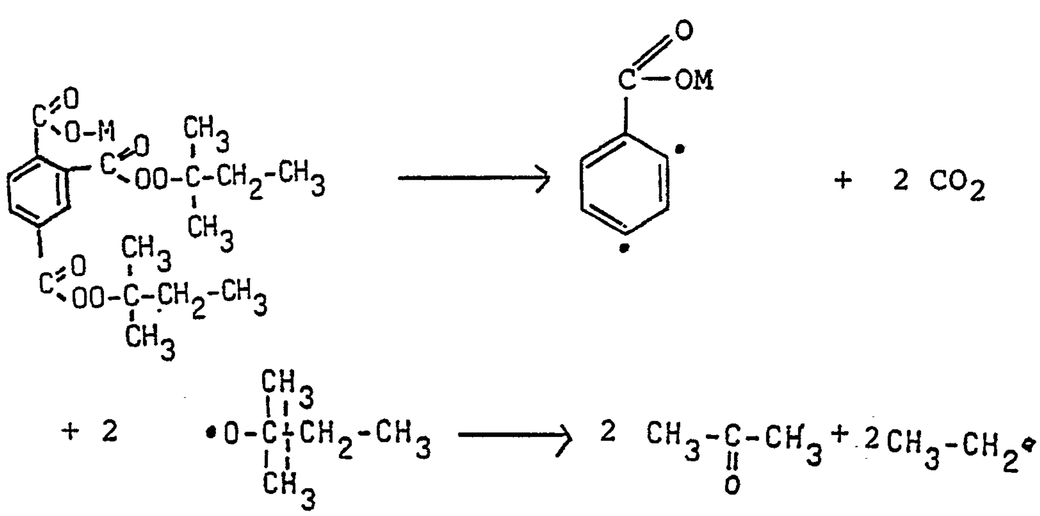

Die Peroxide werden in Mengen von 0,1 bis 15 %, bezogen auf das Polymere, eingesetzt. Es können auch Kombinationen von zwei oder mehreren Peroxiden eingesetzt werden.

Geeignete Azo-ester der Formel XV sind beispielsweise:

- 2,2'-Azo-bis(2-acetoxy-propan), das beim thermischen Zerfall Isopropylacetat-Radikale bildet:

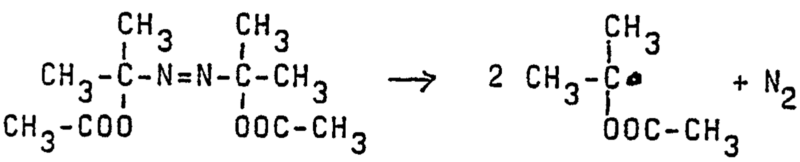

- 2,2'-Azo-bis(2-propionoxy-propan),
- 2,2'-Azo-bis(2-acetoxy-butan),
- 2,2'-Azo-bis(2-propionoxy-butan),
- 2,2'-Azo-bis(2-acetoxy-4-methyl-pentan),
- 2,2'-Azo-bis(2-propionoxy-4-methyl-pentan),
- 1,1'-Azo-bis(1-acetoxy-cyclohexan),
- gamma,gamma'-Azo-bis(gamma-valerolacton) XX

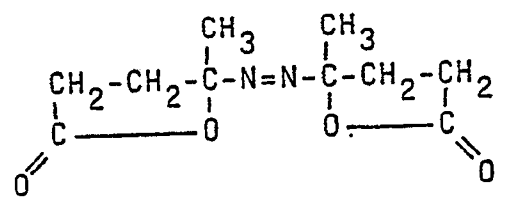

(XX)

- 1,1'-Azo-bis(1-formyloxy-cyclohexan)

Die Azo-ester der Formel XV werden in Mengen von 0,2 % bis 10 % eingesetzt. Es können auch Kombinationen aus zwei oder mehr Azo-estern und ausserdem auch Kombinationen aus einem oder mehreren Peroxiden und einem oder mehreren Azo-estern angewandt werden.

Die Herstellung der in dem erfindungsgemässen Verfahren verwendeten Peroxide erfolgt nach den in der Literatur angegebenen Methoden, wie sie z.B. in den "Methoden der Organischen Chemie" (Houben Weyl), 4. Auflage, herausgegeben von Eugen Müller, 1952, Seiten 3 bis 74, oder in den Patenten US-PS 4 271 279 und US-PS 4 197 244 beschrieben sind.

Die Herstellung der in dem erfindungsgemässen Verfahren verwendeten Azo-ester erfolgt z.B. nach den in der DE-PS 2 748 833 angegebenen Methoden.

Das erfindungsgemässe Verfahren kann auch in Gegenwart von Vernetzungsverstärkern durchgeführt werden.

Vernetzungsverstärker sind ungesättigte Verbindungen die zwei oder mehr reaktionsfähige (= polymerisierbare) C-C-Doppel- oder -Dreifachbindungen enthalten. Als Vernetzungsverstärker geeignet sind beispielsweise: Triallylcyanurat, Triallylisocyanurat, Diallylisocyanurat, Triallyltrimellitat, Diallyladipat, Diallylphthalat, Diallyldiglycoldicarbonat, Trimethylolpropan-di- oder -triallylether, Neopentylalkohol-tri- oder -tetra-allylether, Triallylphosphat, Tetraallyloxyethan, 2-Butylamino-4,6-diallyloxy-s-triazin; - Trimethallylcyanurat; - Tricrotylcyanurat; - Ethylenglycoldimethacrylat, Trimethylolpropantrimethacrylat; - Trimethylolpropantriacrylat; - Polyene, wie Polybutadienkautschuk (= 1,2- oder 1,4-Polybutadien) in fester oder flüssiger Form; - Divinylbenzol, Butandiol-(1,4)-divinylether; Trimethylolpropantrivinylether, Divinylsuccinat, Trivinylisocyanurat, 1,2,4-Trivinylcyclohexan; - Dipropargylphthalat, Tripropargyltrimellitat; - m- oder p-Phenylenbis-(maleinimid), N-Allylmaleinimid, 1,6-Bismaleinimido-hexan; - Allylmethacrylat, Diallylmaleinat, Dipropargylmaleinat.

Die Vernetzungsverstärker werden in Mengen von 0,2 % bis 15 % eingesetzt, wobei auch Kombinationen von zwei oder mehr Vernetzungsverstärkern angewandt werden können.

Als Kovernetzungshilfsmittel kann man Oxide oder Hydroxide zweiwertiger Metalle, z.B. Oxide oder Hydroxide von Calcium, Magnesium, Blei oder Zink, je nach gewünschtem Zweck, verwenden. Diese Verbindungen dienen auch als Säureakzeptoren.

Die Vernetzung gemäss vorliegender Erfindung kann auch in Gegenwart von Antioxidantien (primären, sekundären, HALS), Antiozonantien, Füllstoffen (z.B. Russ, Calciumcarbonat, Talkum, Calciumsilikat, Alumi-

niumsilikat, Kaolin, Kieselsäure, $SiO_2$), Glasfasern, Pigmenten, Licht-Stabilisatoren (UV-Licht, sichtbares Licht, nahes Infrarot, usw.), Verschäumungsmitteln, Flammschutzmitteln, antistatischen Mitteln, Gleitmitteln, Weichmachern oder anderen Zusätzen erfolgen.

Die zur Vernetzung erforderliche Energiezufuhr kann

a) durch direkten Kontakt des zu vernetzenden Polymeren mit einem vorgeheizten Material, z.B. Stahl, geschmolzenes Metall, geschmolzenes Salz, Wasser(dampf), Luft, Stickstoff,

b) durch elektromagnetische Strahlung, z.B. IR, UHF (= Mikrowellen), Röntgenstrahlen, Gamma-Strahlen oder

c) durch Korpuskularstrahlen, z.B. Alpha-Strahlen oder Beta-Strahlen (= Elektronen-Strahlen)

erfolgen.

In einer besonderen Ausführungsform der vorliegenden Erfindung werden für die Vernetzung von Fluorkautschuk Peroxid, Vernetzungsverstärker und Antioxidans aus der Gruppe der Hydrochinonderivate, in einem solchen Verhältnis angewandt, dass eine erwünschte Verlängerung der Scorchzeit erreicht, eine unerwünschte Verlängerung der Vernetzungszeit und eine ebenfalls unerwünschte Verschlechterung der Vernetzung aber vermieden wird (siehe Beispiel 5). Als Scorchzeit wird die Zeit bis zum Beginn der Vernetzung verstanden, die deshalb auch als Verarbeitungszeit betrachtet wird, so dass beispielsweise die Extrusion eines einen Initiator enthaltenden Polymeren aus einem Extruder nur in einem Zeitraum kürzer als die Scorchzeit möglich ist. - Die Peroxide werden in Mengen von 0,1 % bis 15 %, bezogen auf Polymeres, insbesondere 1 % bis 10 %, vorzugsweise 1 % bis 8 %, eingesetzt. - Die Vernetzungsverstärker werden in Mengen von 0,1 % bis 15 %, bezogen auf Polymeres, insbesondere 0,1 % bis 5 %, vorzugsweise 0,2 % bis 2 %, eingesetzt. - Als Antioxidantien sind Hydrochinonderivate der allgemeinen Formeln XXI und XXII

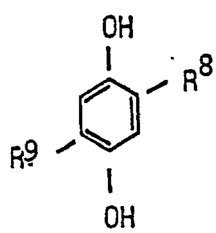 (XXI)

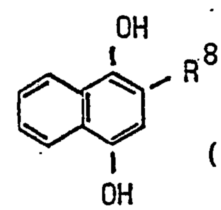 (XXII)

geeignet, in denen $R^8$ und $R^9$, die gleich oder verschieden sein können, H, t-Alkyl mit 4 bis 20 (vorzugsweise 4 bis 8) C-Atomen, Alkylcycloalkyl mit 1 bis 10 (vorzugsweise 1 bis 3) C-Atomen im Alkylrest und 5 bis 12 (vorzugsweise 5 oder 6) C-Atomen im Cycloalkylrest, Aryl-$C_{4-10}$-t-alkyl oder $C_{1-4}$-Alkyl-aryl-$C_{4-10}$-t-alkyl, worin Aryl wie oben definiert ist, bedeuten und beispielsweise t-Butyl, t-Amyl, t-Hexyl (= 1,1-Diethylethyl oder 1,1-Dimethylbutyl), t-Octyl (= 1,1,3,3-Tetramethylbutyl), 1-Methylcyclohexyl-(1),$\alpha$-Cumyl oder p-Isopropylcumyl sein können. Beispiele solcher Hydrochinonderivate sind Mono-t-butyl-hydrochinon, Mono-t-amyl-hydrochinon, 2,5-Di-t-butyl-hydrochinon, 2,5-Di-t-amyl-hydrochinon, Mono (oder 2,5-Di)-t-hexyl-hydrochinon, Mono (oder 2,5-Di)-t-octyl-hydrochinon, Mono (oder 2,5-Di)-1-methylcyclohexyl-(1)-hydrochinon, Mono (oder 2,5-Di)-cumyl-hydrochinon; 2-t-Butyl-naphthohydrochinon, 2-t-Amyl-naphthohydrochinon. Diese Antioxidantien werden zur Scorchzeitverlängerung in Mengen von 0,1 % bis 10 %, bezogen auf Polymeres, insbesondere 0,2 % bis 2 %, vorzugsweise 0,1 % bis 0,5 % eingesetzt. - Das Mischungsverhältnis Peroxid zu Vernetzungsverstärker zu scorchzeitverlängerndem Antioxidans kann in weiten Bereichen schwanken, nämlich Peroxid 5 bis 90 %, insbesondere 20 bis 90 %, vorzugsweise 20 bis 50 %, Vernetzungsverstärker 0,1 bis 90 %, insbesondere 1 bis 30 %, vorzugsweise 2 bis 20 %, scorchzeitverlängerndes Antioxidans 0,1 bis 50 %, insbesondere 1 bis 30 %, vorzugsweise 2 bis 20 %, bezogen auf das Gesamtgewicht Peroxid + Vernetzungsverstärker + Antioxidans. - Antioxidantien haben in der Vernetzung von Fluorkautschuk neben der erwünschten scorchzeitverlängernden Wirkung auch noch eine unerwünschte vernetzungsverschlechternde Wirkung. Die Vernetzungsverstärker dienen dem Ausgleich der vernetzungsverschlechternden Wirkung der Antioxidantien, um diejenige, Vernetzung zu erreichen, die ohne Antioxidant erzielt wird.

Allerdings tritt die ausgleichende Wirkung der Vernetzungsverstärker nur dann voll in Erscheinung, wenn Antioxidantien auf Hydrochinonbasis angewandt werden. Die vernetzungsverschlechternde Wirkung der anderen Antioxidantien lässt sich dagegen durch Vernetzungsverstärker nicht voll ausgleichen.

Beispiele optimaler Mischungsverhältnisse sind

75 % 1,1-Bis(t-amylperoxy)-3,3,5-trimethylcyclohexan

17 % Triallyltrimellitat

8 % 2,5-Di-t-amyl-hydrochinon

73 % Di-t-amylperoxid
19,5 % Triallylcyanurat
6,5 % 2,5-Di-t-butyl-hydrochinon

Als gute Vernetzungsperoxide gelten solche, die t-Butylperoxy- und Cumylperoxy-Gruppen enthalten und aus denen während der thermischen Zersetzung t-Butylperoxy- und Methyl-Radikale bzw. Cumylperoxy- und Methyl-Radikale entstehen, sowie ausserdem noch solche Peroxide, die während der thermischen Zersetzung Phenyl-Radikale bilden, wie beispielsweise t-Butyl-peroxybenzoat. J. H. Elson und J. K. Kochi, J. Org. Chem. 39, Seiten 2093 und 2095 (1974) haben gezeigt, dass t-Amyloxy-Radikale als Wasserstoffabstraktoren ineffektiv sind (wogegen t-Butoxy-Radikale sehr wirksam sind), woraus folgt, dass Peroxide, die in t-Amyloxy-Radikale zerfallen, viel schlechtere Vernetzer sind als Peroxide, die in t-Butoxy-Radikale zerfallen, da Vernetzung eine vorhergehende Wasserstoffabstraktion voraussetzt. Es war daher überraschend, dass bei Verwendung der erfindungsgemässen Peroxide überhaupt eine gute Vernetzung erfolgt und noch überraschender, dass die Vernetzung sogar noch besser ausfällt als bei Verwendung des industriell eingesetzten Standardperoxids 2,5-Dimethyl-2,5-bis(t-butylperoxy)-hexan (siehe Beispiel 1). Aus Beispiel 1 ist auch die gute Vernetzungsfähigkeit von Di-t-amyl-peroxid für Fluorkautschuk zu ersehen.

Azo-ester der Formel XV sind schlechtere Vernetzer als Peroxide. Es war unsicher, ob Jod- oder Brom-Atome enthaltender Fluorkautschuk durch die Azo-ester überhaupt vernetzt werden konnte, und es ist deshalb um so überraschender, das gute Vernetzung erfolgt.

Die Erfindung wird durch die nachstehenden Beispiele erläutert.

## BEISPIELE

### Beispiel 1:

In eine Fluorkautschuk-Mischung, bestehend aus

| | | | |
|---|---|---|---|
| Jodatome enthaltendem Fluorkautschuk | 100 | Gew.-Teile | (= 68,3 Gew.-%) |
| Hellen Füllstoffen | 30 | " | (= 20,5 " ) |
| Russ | 10 | " | (= 6,8 " ) |
| Zinkoxid | 5 | " | (= 3,4 " ) |
| Triallylcyanurat II | 0,7 | " | (= 0,5 " ) |
| Triallylisocyanurat III | 0,7 | " | (= 0,5 " ) |
| | 146,4 | Gew.-Teile | (= 100 Gew.-%) |

wurden die in der nachstehenden Tabelle unter A) und B) angegebenen Mengen Peroxid auf der Walze bei 70°C eingearbeitet (die in der Tabelle angegebenen Mengen (in Gew.-%) Peroxid beziehen sich auf die Fluorkautschuk-Mischung und nicht auf den Fluorkautschuk). Anschliessend wurde diese, ein Peroxid enthaltende Fluorkautschuk-Mischung in der beheizten Form eines Monsanto-Rheometers, die eine um 1° oszillierende Scheibe enthält, bei 180°C für 12 Minuten vernetzt. Der Fortgang der Vernetzung wurde als Kurve registriert und ist am Anstieg des Drehmoments zu erkennen. Aus der Kurve lassen sich die Vernetzungszeit (= $t_{90}$) und die Vernetzung (= Resultate aus Vernetzungsgrad und Vernetzungsdichte) (= $M_H$-$M_L$) ablesen:

| | |
|---|---|
| $t_{90}$ = | Vernetzungszeit (= Zeit in Minuten bis zum Erreichen von 90 % der maximalen Vernetzung) |
| $M_L$ = | tiefster Punkt der Vernetzungskurve |
| $M_H$ = | höchster Punkt der Vernetzungskurve |
| $M_H$-$M_L$ = | relative Vernetzung (hohe Zahlen bedeuten eine gute Vernetzung) |
| Shore Härte A = | ebenfalls ein Mass der Vernetzung (aber ungenauer als $M_H$-$M_L$). |

| Peroxide | $t_{90}$ | $M_H-M_L$ | Shore Härte A |
|---|---|---|---|
| A) Äquivalente Mengen Peroxid: | | | |
| 2,50% 2,5-Dimethyl-2,5-bis(t-butylperoxy)-hexan I, 45,4 %ig auf Füllstoff (Vergleich) | 1,90 Min. | 64 | 83 |
| 1,43% Di-t-amyl-peroxid, 95%ig | 2,05 " | 65 | 84 |
| 1,32% 3,3-Bis(t-amylperoxy)-buttersäure-ethylester, 94,7%ig (Vergleich) | 1,30 " | 58 | 80 |
| B) Verschiedene Mengen Di-t-amyl-peroxid: | | | |
| 1,2% Di-t-amyl-peroxid, 95%ig | 1,85 Min. | 67 | 82 |
| 1,3% " | 1,80 " | 68 | 80 |
| 1,6% " | 1,55 " | 65 | 79 |
| 2,0% " | 1,50 " | 63 | 80 |

In diesem Beispiel wird das erfindungsgemässe Di-t-amylperoxid (das Ethyl-Radikale aber keine Methyl-Radikale bildet) mit dem industriell zur Vernetzung von Fluorkautschuk am meisten verwendeten Peroxid 2,5-Dimethyl-2,5-bis(t-butylperoxy)-hexan I (das Methyl-Radikale bildet) und dem Peroxyketal 3,3-Bis(t-amylperoxy)-buttersäure-ethylester (das Methyl-Radikale und Ethyl-Radikale bildet) verglichen.

Man erkennt, dass durch das erfindungsgemässe Di-t-amylperoxid eine fast so gute Vernetzung bewirkt wird, wie durch das nicht erfindungsgemässe Standardperoxid I.

Beispiel 2:

Die Fluorkautschuk-Mischung aus Beispiel 1 (die 68,3% eines Jodatome enthaltenden Fluorkautschuks enthält) wurde mit 1,20 % des Azo-esters 2,2'-Azo-bis(2-acetoxy-propan) sowie als Vergleich mit 0,67 % (= äquivalente Menge) 2,5-Dimethyl-2,5-bis(t-butylperoxy)-hexan (die Initiatormengen (in Gew.-%) beziehen sich auf die Fluorkautschuk-Mischung und nicht auf den Fluorkautschuk) bei 240 °C 40 Minuten im offenen Schälchen, also unter Luftzutritt, vernetzt. Die Bestimmung des Vernetzungsgrades der Kautschukmischung erfolgte durch 5 mal je 1-stündige Extraktion mit je 80 ml siedendem Cyclohexanon (80 ml Cyclohexanon für 1 g Kautschukmischung), das 0,005 Gew.-% 2,6-Di-t-butyl-p-cresol als Antioxidans enthielt, unter Rückfluss; während der Extraktion befand sich etwa 1 g des zu prüfenden Kautschuks, der in Streifen oder unregelmässige Stückchen zerschnitten worden war, locker eingepackt, in einem Drahtnetz aus Edelstahl. Nach beendeter Extraktion wurde das Cyclohexanon im Trockenschrank bei 165 °C entfernt. Durch Wägen des mit Kautschuk gefüllten Drahtnetzes vor und nach der Extraktion wurde der Gewichtsverlust bestimmt. Der Vernetzungsgrad errechnet sich aus der Menge des nicht aufgelösten Kautschukanteils mal 100 dividiert durch die Kautschukmenge vor der Extraktion. Ergebnis:

| Initiatoren | Vernetzungs-grade |
|---|---|
| ohne Initiator (Blindwert) | 18 % |
| 1,20 % 2,2'-Azo-bis(2-acetoxy-propan) | 72 % |
| 0,67 % 2,5-Dimethyl-2,5-bis(t-butyl-peroxy)-hexan (Vergleich) | 97 % |

Der erfindungsgemässe Azo-ester 2,2'-Azo-bis(2-acetoxypropan) erweist sich damit als brauchbarer Vernetzungsinitiator für Fluorkautschuk.

Beispiel 3:

Die Fluorkautschuk-Mischung aus Beispiel 1 (die 68,3 % eines Jodatome enthaltenden Fluorkautschuks enthält) wurde mit äquivalenten Mengen der erfindungsgemässen cyclischen Perketale XVI (hergestellt aus 2,5-Dimethyl-2,5-dihydroperoxy-hexan und Cyclohexanon) und XVII (hergestellt aus 2,5-Dimethyl-2,5-dihydroperoxy-hexan und 3,3,5-Trimethylcyclohexanon)(die in der nachstehenden Tabelle angegebenen Initiatormengen (in Gew.-%) beziehen sich auf die Fluorkautschuk-Mischung und nicht auf den Fluorkautschuk) 40 Minuten bei 180°C im offenen Schälchen, also unter Luftzutritt, vernetzt im Vergleich zur Vernetzung mit der äquivalenten Menge des nicht erfindungsgemässen 2,5-Dimethyl-2,5-bis(t-butylperoxy)-hexans und mit der äquivalenten Menge des erfindungsgemässen Di-t-amyl-peroxids. Die Bestimmung des Vernetzungsgrades erfolgte wie in Beispiel 2 durch 5 mal je 1-stündige Extraktion mit der je 80-fachen Volumenmenge siedendem Cyclohexanon unter Rückfluss:

| Äquivalente Mengen Peroxid | Vernetzungs-grade |
|---|---|
| ohne Peroxid, nicht erhitzt | 1,2 % |
| ohne Peroxid, 40 Min. auf 180°C erhitzt (also echter Blindversuch) | 0,4 % |
| 1,24 % 2,5-Dimethyl-2,5-bis(t-butyl-peroxy)-hexan, 90,6%ig (Vergleich) | 91 % |
| 1,42 % Di-t-amyl-peroxid | 89 % |
| 1,64 % Cyclisches Perketal XVI, 60,8%ig | 86 % |
| 2,19 % Cyclisches Perketal XVII, 53,2%ig | 82 % |

Die beiden erfindungsgemässen cyclischen Perketale XVI und XVII zeigten also eine gute Vernetzung, was durch Vergleich mit dem ebenfalls erfindungsgemässen Di-t-amyl-peroxid und dem nicht-erfindungsgemässen, in der Fluorkautschukvernetzung am meisten verwendeten 2,5-Dimethyl-2,5-bis(t-butylperoxy)-hexan dokumentiert wird.

Beispiel 4:

Die Fluorkautschuk-Mischung aus Beispiel 1 (die 68,3 % eines Jodatome enthaltenden Fluorkautschuks enthält) wurde im Monsanto-Rheometer wie in Beispiel 1, jedoch unter Verwendung von äquivalenten Mengen der erfindungsgemässen cyclischen Perketale XVI und XVII

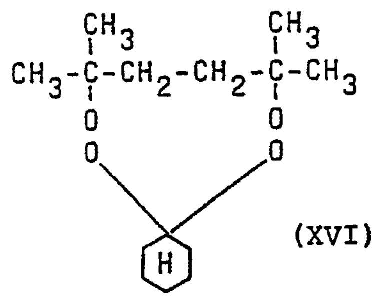

(XVI)

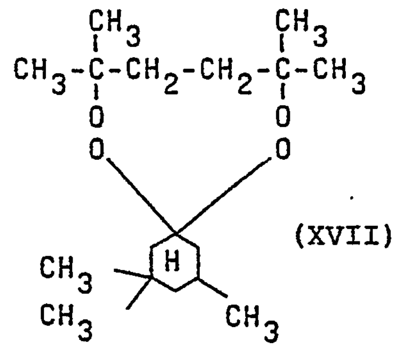

(XVII)

vernetzt, wobei sich die in der Tabelle angegebenen Initiatormengen (in Gew.-%) auf die Fluorkautschuk-Mischung und nicht auf den Fluorkautschuk beziehen:

| Äquivalente Mengen Peroxid | $t_{90}$ | $M_H-M_L$ | Shore Härte A |
|---|---|---|---|
| 8,22% Cyclisches Perketal XVI, 60,8%ig | 6,9 Min. | 43 | 75 |
| 10,95% Cyclisches Perketal XVII, 53,2%ig | 10,7 " | 24 | 74 |

Beispiel 5:

Die Fluorkautschuk-Mischung aus Beispiel 1 (die 68,3 % eines Jodatome enthaltenden Fluorkautschuks enthält) wurde im Monsanto-Rheometer wie in Beispiel 1, jedoch zur Scorchzeitverlängerung mit dem in der nachstehenden Tabelle angegebenen Gemisch aus Di-t-amyl-peroxid (als Vernetzungsinitiator), Triallyltrimellitat (als Vernetzungsverstärker) und Di-t-amyl-hydrochinon (als scorchzeitverlängerndes Antioxidans) vernetzt; in den Gemischen a)-d) befinden sich die gleichen Mengen Peroxid, nämlich 1,35 Gew.-% Di-t-amyl-peroxid, 97,5 %ig:

| Vernetzungs-Mischungen (alle Angaben (in Gew.-%) beziehen sich auf die Fluorkautschuk-Mischung des Beispiels 1) | Scorchzeit | $t_{90}$ | $M_H$-$M_L$ | Shore-Härte A |
|---|---|---|---|---|
| a) 2,93 % eines Gemisches aus 46,1% Di-t-amyl-peroxid, 97,5%ig 53,9% Kieselsäure (=Füllstoff) (Vergleich) | 0,76 Min. | 1,85 Min. | 72 | 76 |
| b) 3,29 % eines Gemisches aus 41,0% Di-t-amyl-peroxid, 97,5%ig 10,9% Triallyltrimellitat 48,1% Kieselsäure (=Füllstoff) (Vergleich) | 0,80 " | 1,85 " | 76 | 76 |
| c) 3,03 % eines Gemisches aus 44,6% Di-t-amyl-peroxid, 97,5%ig 3,3% Di-t-amyl-hydrochinon 52,1% Kieselsäure (=Füllstoff) (Vergleich) | 1,30 " | 3,90 " | 68 | 76 |
| d) 3,39 % eines Gemisches aus 39,8% Di-t-amyl-peroxid, 97,5%ig 10,6% Triallyltrimellitat 2,9% Di-t-amyl-hydrochinon 46,7% Kieselsäure (=Füllstoff) | 1,05 " | 2,30 " | 76 | 76 |

Man erkennt, dass die durch Zugabe des Scorchzeitverlängerers Di-t-amyl-hydrochinon (Gemisch c)) erzielte gewünschte Verlängerung der Scorchzeit (1,30 Min.) erkauft wird mit einer Verschlechterung der Vernetzung (68) und einer ebenfalls unerwünschten Verlängerung der Vernetzungszeit (3,90 Min.). Erst durch den Einsatz des Scorchzeitverlängerers Di-t-amyl-hydrochinon und des Vernetzungsverstärkers Triallyltrimellitat (Gemisch d)) wird die erwünschte Scorchzeitverlängerung (1,05 Min.) ohne Verschlechterung, ja sogar mit einer Verbesserung der Vernetzung (76) und einer nur geringen Verlängerung der Vernetzungszeit (2,30 Min.) erzielt; die Scorchzeitverlängerung beträgt 41%.

## Patentansprüche

1. Verfahren zur Vernetzung von Brom- und/oder Jodatome enthaltenden Fluorkautschuken mittels eines oder mehrerer radikalischer Vernetzungsinitiatoren, dadurch gekennzeichnet, dass mittels radikalischer Vernetzungsinitiatoren vernetzt wird, die beim thermischen Zerfall keine Methyl- oder Phenyl-Radikale bilden und 10 Stunden-Halbwertszeit-Temperaturen über 80°C aufweisen, und dass als derartige Vernetzungsinitiatoren verwendet werden:

   ein oder mehrere **Peroxide** (aus der Gruppe der t-Alkylperoxide, Peroxyketale und Peroxyester) der allgemeinen Formel XI

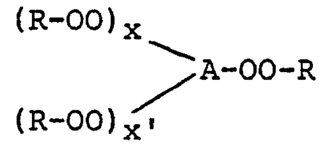 (XI)

wobei bedeuten:

x und x' unabhängig voneinander 0 oder 1;

A =

i) t-Alkyl, t-Alkenyl oder t-Alkinyl mit jeweils 5 bis 20 C-Atomen,
ii) t-Alkdiyl, t-Alkendiyl oder t-Alkindiyl mit jeweils 8 bis 20 C-Atomen,
iii) t-Alktriyl, t-Alkentriyl oder t-Alkintriyl mit jeweils 12 bis 30 C-Atomen,
iv) Mono-, Di- oder Tri-alkyl-cycloalk-mono-, -di- oder -tri-yl mit 1 bis 10 C-Atomen im Alkylrest und 5 bis 12 C-Atomen im Cycloalkylrest, mit der Massgabe, dass der Alkylrest und der Peroxyrest jeweils am gleichen Ringkohlenstoffatom gebunden sind,

wobei alle vorgenannten Reste durch Phenyl, OH oder Alkoxy mit 1 bis 6 C-Atomen substituiert sein können,
v) Cycloalk-1,1-diyl mit 5 bis 12 C-Atomen im Cycloalkylrest, der gegebenenfalls durch Phenyl, OH, $C_{1-6}$-Alkoxy oder 1 bis 3 $C_{1-6}$-Alkyl substituiert sein kann,
vi) oder einen Rest der Formel

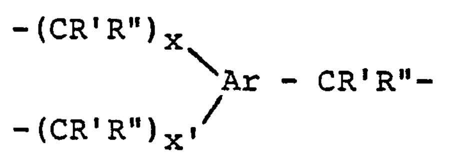 ,

worin R' einen Alkylrest mit 1 bis 10 C-Atomen, R" einen Alkylrest mit 2 bis 10 C-Atomen und Ar einen gegebenenfalls durch ein oder mehrere $C_1$-$C_3$-Alkyl- oder -Alkoxy-Reste substituierten Arylrest bedeuten und

mit der Massgabe, dass x in $(R\text{-}OO)_x$- und in $\text{-}(CR'R'')_x$- dieselbe Bedeutung hat und x' in $(R\text{-}OO)_{x'}$- und in $\text{-}(CR'R'')_{x'}$- dieselbe Bedeutung hat;

R =

i) t-Alkyl, t-Alkenyl oder t-Alkinyl mit 5 bis 20 C-Atomen oder, falls x und/oder x' = 1, können zwei R zusammengenommen t-Alkdiyl, t-Alkendiyl oder t-Alkindiyl mit 8 bis 20 C-Atomen bedeuten,
ii) Alkyl-cycloalkyl, oder, falls x und/oder x' = 1, können zwei R zusammengenommen Dialkylcycloalkdiyl, mit 1 bis 10 C-Atomen im Alkylrest und 5 bis 12 C-Atomen im Cycloalkylrest bedeuten, mit der Massgabe, dass der Alkylrest an das gleiche Ringkohlenstoffatom gebunden ist wie der Peroxyrest von A,

wobei vorgenannte Reste durch Phenyl, OH oder Alkoxy mit 1 bis 6 C-Atomen substituiert sein können,
iii) oder einen Rest der Formel

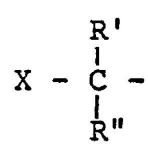 ,

wobei X Alkyl, Alkenyl oder Alkinyl mit 2 bis 8 C-Atomen oder gegebenenfalls wie oben angegeben

substituiertes Ar oder Cycloalkyl bedeutet und R' und R" die oben angegebenen Bedeutungen haben,

iv) oder, falls x und/oder x' = 1, können zwei R zusammengenommen einen Rest der Formel

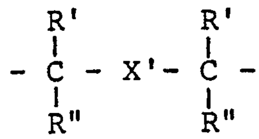

oder einen Rest der Formel

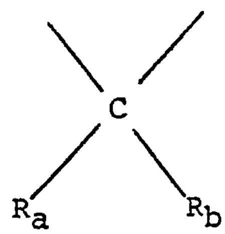

bedeuten, wobei X' Alkdiyl, Alkendiyl oder Alkindiyl mit 2 bis 8 C-Atomen oder gegebenenfalls wie oben angegeben substituiertes Ar oder Cycloalkdiyl bedeutet, R' und R" die oben angegebenen Bedeutungen haben und $R_a$ und $R_b$ gleich oder verschieden sein können und Alkyl, Alkenyl oder Alkinyl mit 2 bis 10 Kohlenstoffatomen oder einen Rest der Formel $-R_c-COOR_d$ bedeuten, wobei $R_c$ Alkdiyl mit 1 bis 10 C-Atomen und $R_d$ Alkyl mit 1 bis 10 C-Atomen, Phenyl oder mit $C_1$-$C_4$-Alkyl substituiertes Phenyl sein kann, oder $R_a$ und $R_b$ bevorzugt zusammen mit dem C-Atom, an das sie gebunden sind, einen Ring mit insgesamt 5 bis 12 C-Atomen bilden, wobei vorgenannte Reste $R_a$ und $R_b$ sowie der durch $R_a$ und $R_b$ zusammen mit dem C-Atom, an das sie gebunden sind, gebildete Ring durch $C_1$-$C_4$-Alkyl, $C_1$-$C_4$-Alkoxy, Phenyl oder OH substituiert sein können,

v) oder einen Rest der Formel

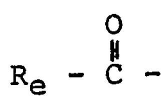

vi) oder, falls x und/oder x' = 1, können zwei R zusammengenommen einen Rest der Formel

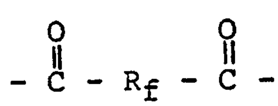

bedeuten, wobei $R_e$ gegebenenfalls durch $C_1$-$C_3$-Alkoxy substituiertes Alkyl, Alkenyl oder Alkinyl mit 2 bis 20 C-Atomen, gegebenenfalls durch $C_1$-$C_3$-Alkyl oder -Alkoxy substituiertes Cycloalkyl mit 5 bis 12 C-Atomen oder durch $C_1$-$C_{10}$-Alkyl, -Alkoxy, $C_1$-$C_{18}$-Alkylcarbonyl oder -Alkoxycarbonyl substituiertes Phenyl oder Naphthyl und wobei $R_f$ gegebenenfalls durch $C_1$-$C_{16}$-Alkyl, $C_2$-$C_{16}$-Alkenyl oder $C_1$-$C_3$-Alkoxy substituiertes Alkdiyl, Alkendiyl oder Alkindiyl mit 2 bis 20 C-Atomen, gegebenenfalls durch $C_1$-$C_3$-Alkyl oder -Alkoxy substituiertes Cycloalkdiyl mit 5 bis 12 C-Atomen oder durch $C_1$-$C_{10}$-Alkyl, -Alkoxy, $C_1$-$C_{10}$-Alkylcarbonyl oder -Alkoxycarbonyl substituiertes Phenylen oder Naphthylen bedeuten;

oder der allgemeinen Formel XII

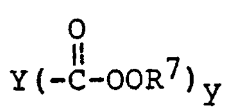

(XII),

worin bedeuten:

Y =
Alkdiyl, Alkendiyl oder Alkindiyl mit 2 bis 20 C-Atomen,

Alktriyl, Alkentriyl oder Alkintriyl mit 2 bis 20 C-Atomen,

gegebenenfalls durch $C_1$-$C_3$-Alkyl oder -Alkoxy substituiertes Cycloalkdiyl, -triyl oder -tetryl mit 5 bis 12 C-Atomen,

oder ein, durch mindestens eine $C_1$-$C_3$-Alkyl- oder -Alkoxy-Gruppe substituierter Benzolrest oder Naphthalinrest,

y =
die Zahlen 2, 3 oder 4 und

$R^7$ =
gleich oder verschieden und = R i), R ii) oder R iii) (nicht aber R iv), R v), R vi));

oder der allgemeinen Formel XIII

$$(R'''O-\overset{O}{\overset{\|}{C}})-Z(-\overset{O}{\overset{\|}{C}}-OOR^7)_z \qquad \text{(XIII)},$$

worin Z einen Benzolrest oder einen Naphthalinrest bedeutet, z die Zahlen 2 oder 3 bedeutet, R''' einen Alkylrest mit 1 bis 18 C-Atomen bedeutet und $R^7$ die Bedeutung von R i), R ii) und R iii) (nicht aber von R iv), R v) und R vi)) hat;

oder ein dimeres oder polymeres Umsetzungsprodukt XIV einer Dicarbonsäure der Formel HOOC-$R_f$-COOH und eines Dihydroperoxids der Formel HOO-V-OOH mit einem Polymerisationsgrad von vorzugsweise bis 30, worin $R_f$ die oben angegebene Bedeutung hat und V bedeutet

i) gegebenenfalls durch Carboxy oder $C_{1-4}$-Alkoxycarbonyl substituiertes t-Alkdiyl, t-Alkendiyl oder t-Alkindiyl mit 4 bis 20 C-Atomen,

ii) gegebenenfalls durch Carboxy oder $C_{1-4}$-Alkoxycarbonyl substituiertes Dialkylcycloalkdiyl mit 1 bis 10 C-Atomen im Alkylrest und 5 bis 12 C-Atomen im Cycloalkylrest, mit der Massgabe, dass der Alkylrest an dem gleichen Ringkohlenstoffatom gebunden ist wie der Peroxy- oder Carboxylrest,

iii) oder einen Rest der Formel

$$-\underset{R''}{\overset{R'}{C}}-W-\underset{R''}{\overset{R'}{C}}- \quad ,$$

worin R' und R'' die oben angegebenen Bedeutungen haben und W gegebenenfalls durch $C_1$-$C_3$-Alkyl oder -Alkoxy substituiertes Cycloalkdiyl mit 5 bis 12 C-Atomen, Phenylen oder Naphthylen bedeutet;

und/oder
ein oder mehrere **Azo-ester** der allgemeinen Formel XV

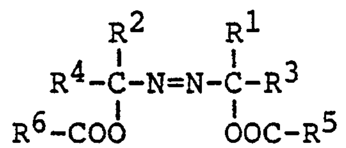 (XV)

worin $R^1$, $R^2$, $R^3$ und $R^4$ gleich oder verschieden sein können und $C_{1-10}$-Alkyl oder $C_{5-6}$-Cycloalkyl bedeuten; $R^5$ und $R^6$ gleich oder verschieden sein können und H, $C_{1-10}$-Alkyl, $C_{5-6}$-Cycloalkyl, Phenyl oder Phenyl-$C_{1-10}$-alkyl bedeuten, wobei die genannten Reste $R^1$-$R^6$ gegebenenfalls Methylgruppen, $C_{2-10}$-Alkylketten, Phenyl oder Phenyl-$C_{1-10}$-alkyl als Substituenten enthalten können; oder worin $R^2$ und $R^4$ und/oder $R^1$ und $R^3$ jeweils zusammen mit dem C-Atom, an das sie gebunden sind, $C_{5-12}$-Cycloalk-1,1-diyl bedeuten, das gegebenenfalls durch ein oder mehrere Methyl- oder $C_{2-10}$-Alkylgruppen substituiert sein kann, oder worin $R^4$ und $R^6$ und/oder $R^3$ und $R^5$ unabhängig voneinander jeweils zusammen $-CH_2-CH_2-$ oder $-CH_2-CH_2-CH_2-$bedeuten, die gegebenenfalls durch ein oder mehrere Methyl- oder $C_{2-10}$-Alkylgruppen substituiert sein können.

2. Verfahren nach Anspruch 1, dadurch gekennzeichnet, dass Peroxide der allgemeinen Formel XI verwendet werden, wobei bedeuten:

x und x' unabhängig voneinander 0 oder 1;

A =

i) t-Alkyl, t-Alkenyl oder t-Alkinyl mit jeweils 5 bis 12 C-Atomen,
ii) t-Alkdiyl, t-Alkendiyl oder t-Alkindiyl mit jeweils 8 bis 16 C-Atomen,
iii) t-Alktriyl, t-Alkentriyl oder t-Alkintriyl mit jeweils 12 bis 20 C-Atomen,
iv) Mono-, Di- oder Tri-alkyl-cycloalk-mono-, -di- oder -tri-yl mit 1 bis 4 C-Atomen im Alkylrest, wobei der Alkylrest unverzweigt ist, und mit 5 oder 6 C-Atomen im Cycloalkylrest, mit der Massgabe, dass der unverzweigte Alkylrest und der Peroxyrest jeweils am gleichen Ringkohlenstoffatom gebunden sind,

wobei alle vorgenannten Reste durch Phenyl, OH oder Alkoxy mit 1 bis 6 C-Atomen substituiert sein können,
v) Cycloalk-1,1-diyl mit 5 oder 6 C-Atomen im Cycloalkylrest, der gegebenenfalls durch Phenyl, OH, $C_{1-6}$-Alkoxy oder 1 bis 3 Methyl substituiert sein kann,
vi) oder einen Rest der Formel

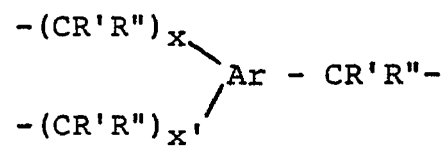 ,

worin R' einen unverzweigten Alkylrest mit 1 bis 5 C-Atomen, R" einen unverzweigten Alkylrest mit 2 bis 5 C-Atomen und Ar einen Benzol- oder Naphthalin-Rest, der durch Methyl substituiert sein kann, bedeuten und

mit der Massgabe, dass x in $(R\text{-}OO)_x$- und in $-(CR'R'')_x$- dieselbe Bedeutung hat und x' in $(R\text{-}OO)_{x'}$- und in $-(CR'R'')_{x'}$- dieselbe Bedeutung hat;

R =

i) t-Alkyl, t-Alkenyl oder t-Alkinyl mit 5 bis 12 C-Atomen oder, falls x und/oder x' = 1, können zwei R zusammengenommen t-Alkdiyl, t-Alkendiyl oder t-Alkindiyl mit 8 bis 16 C-Atomen bedeuten,
ii) Alkyl-cycloalkyl, oder, falls x und/oder x' = 1, können zwei R zusammengenommen Dialkylcycloalkdiyl, mit 1 bis 4 C-Atomen im Alkylrest, wobei der Alkylrest unverzweigt ist, und mit 5 oder 6 C-Atomen im Cycloalkylrest bedeuten, mit der Massgabe, dass der unverzweigte Alkylrest an das gleiche Ringkohlenstoffatom gebunden ist wie der Peroxyrest von A,

wobei vorgenannte Reste durch Phenyl, OH oder Alkoxy mit 1 bis 6 C-Atomen substituiert sein können,
iii) oder einen Rest der Formel

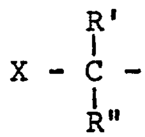

,

wobei X Alkyl, Alkenyl oder Alkinyl mit 2 bis 8 C-Atomen oder gegebenenfalls wie oben in diesem Anspruch angegeben substituiertes Phenyl, Naphthyl oder Cycloalkyl bedeutet und R' und R" die oben in diesem Anspruch angegebenen Bedeutungen haben,
iv) oder, falls x und/oder x' = 1, können zwei R zusammengenommen einen Rest der Formel

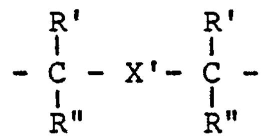

oder einen Rest der Formel

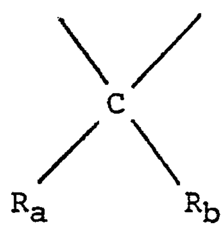

bedeuten, wobei X' Alkdiyl, Alkendiyl oder Alkindiyl mit 2 bis 8 C-Atomen oder gegebenenfalls wie oben in diesem Anspruch angegeben substituiertes Phenylen, Naphthylen oder Cycloalkdiyl bedeutet, R' und R" die oben in diesem Anspruch angegebenen Bedeutungen haben und $R_a$ und $R_b$ gleich oder verschieden sein können und Alkyl, Alkenyl oder Alkinyl mit 2 bis 5 Kohlenstoffatomen oder einen Rest der Formel $-R_c-COOR_d$ bedeuten, wobei $R_c$ Alkdiyl mit 1 bis 5 C-Atomen und $R_d$ Alkyl mit 1 bis 5 C-Atomen, Phenyl oder mit $C_1$-$C_4$-Alkyl substituiertes Phenyl sein kann, oder $R_a$ und $R_b$ bevorzugt zusammen mit dem C-Atom, an das sie gebunden sind, einen Ring mit insgesamt 5 oder 6 C-Atomen bilden, wobei vorgenannte Reste $R_a$ und $R_b$ sowie der durch $R_a$ und $R_b$ zusammen mit dem C-Atom, an das sie gebunden sind, gebildete Ring durch $C_1$-$C_4$-Alkyl, $C_1$-$C_4$-Alkoxy, Phenyl oder OH substituiert sein können,
v) oder einen Rest der Formel

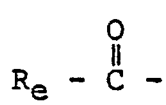

vi) oder, falls x und/oder x' = 1, können zwei R zusammengenommen einen Rest der Formel

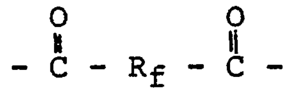

bedeuten, wobei $R_e$ gegebenenfalls durch $C_1$-$C_3$-Alkoxy substituiertes Alkyl, Alkenyl oder Alkinyl mit 2 bis 20 C-Atomen, gegebenenfalls durch $C_1$-$C_3$-Alkyl oder -Alkoxy substituiertes Cycloalkyl mit 5 bis 12 C-Atomen oder durch $C_1$-$C_5$-Alkyl, -Alkoxy, $C_1$-$C_{12}$-Alkylcarbonyl oder -Alkoxycarbonyl substituiertes Phenyl oder Naphthyl und wobei $R_f$ gegebenenfalls durch $C_1$-$C_{16}$-Alkyl, $C_2$-$C_{16}$-Alkenyl oder $C_1$-$C_3$-Alkoxy substituiertes Alkdiyl, Alkendiyl oder Alkindiyl mit 2 bis 20 C-Atomen, gegebenenfalls durch $C_1$-$C_3$-Alkyl oder -Alkoxy substituiertes Cycloalkdiyl mit 5 bis 12 C-Atomen oder durch $C_1$-$C_5$-Alkyl, -Alkoxy, $C_1$-$C_5$-Alkylcarbonyl oder -Alkoxycarbonyl substituiertes Phenylen oder Naphthylen bedeuten.

**3.** Verfahren nach Anspruch 1, dadurch gekennzeichnet, dass Peroxide der allgemeinen Formel XII verwendet werden, worin bedeuten:

Y =
Alkdiyl, Alkendiyl oder Alkindiyl mit 2 bis 16 C-Atomen,

Alktriyl, Alkentriyl oder Alkintriyl mit 2 bis 16 C-Atomen,

gegebenenfalls durch $C_1$-$C_3$-Alkyl oder -Alkoxy substituiertes Cycloalkdiyl, -triyl oder -tetryl mit 5 oder 6 C-Atomen,

oder ein, durch mindestens eine $C_1$-$C_3$-Alkyl- oder -Alkoxy-Gruppe substituierter Benzolrest oder Naphthalinrest,

y =
die Zahlen 2, 3 oder 4 und

$R^7$ =
gleich oder verschieden und = R i), R ii) oder R iii) wie im Anspruch 2 definiert (nicht aber R iv), R v), R vi)).

**4.** Verfahren nach Anspruch 1, dadurch gekennzeichnet, dass Peroxide der allgemeinen Formel XIII verwendet werden, worin Z einen Benzolrest oder einen Naphthalinrest bedeutet, z die Zahlen 2 oder 3 bedeutet, R''' einen Alkylrest mit 1 bis 18 C-Atomen bedeutet und $R^7$ die Bedeutung von R i), R ii) und R iii) wie im Anspruch 2 definiert (nicht aber von R iv), R v) und R vi)) hat.

**5.** Verfahren nach Anspruch 1, dadurch gekennzeichnet, dass Peroxide XIV mit einem Polymerisationsgrad von bis 20 verwendet werden, worin $R_f$ die im Anspruch 2 angegebene Bedeutung hat und V bedeutet
i) gegebenenfalls durch Carboxy oder $C_{1-4}$-Alkoxycarbonyl substituiertes t-Alkdiyl, t-Alkendiyl oder t-Alkindiyl mit 4 bis 12 C-Atomen,
ii) gegebenenfalls durch Carboxy oder $C_{1-4}$-Alkoxycarbonyl substituiertes Dialkylcycloalkdiyl mit 1 bis 4 C-Atomen im Alkylrest und 5 oder 6 C-Atomen im Cycloalkylrest, mit der Massgabe, dass der Alkylrest an dem gleichen Ringkohlenstoffatom gebunden ist wie der Peroxy- oder Carboxylrest,
iii) oder einen Rest der Formel

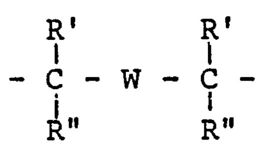 ,

worin R' und R'' die im Anspruch 2 angegebenen Bedeutungen haben und W gegebenenfalls durch

$C_1$-$C_3$-Alkyl oder -Alkoxy substituiertes Cycloalkdiyl mit 5 oder 6 C-Atomen, Phenylen oder Naphthylen bedeutet.

6. Verfahren nach Anspruch 1, dadurch gekennzeichnet, dass Azo-ester der allgemeinen Formel XV verwendet werden, worin $R^1$, $R^2$, $R^3$ und $R^4$ gleich oder verschieden sein können und $C_{1-10}$-Alkyl oder $C_{5-6}$-Cycloalkyl bedeuten;
$R^5$ und $R^6$ gleich oder verschieden sein können und H, $C_{1-10}$-Alkyl, $C_{5-6}$-Cycloalkyl, Phenyl oder Phenyl-$C_{1-10}$-alkyl bedeuten, wobei die genannten Reste $R^1$-$R^6$ gegebenenfalls Methylgruppen, $C_{2-10}$-Alkylketten, Phenyl oder Phenyl-$C_{1-10}$-alkyl als Substituenten enthalten können;
oder worin $R^2$ und $R^4$ und/oder $R^1$ und $R^3$ jeweils zusammen mit dem C-Atom, an das sie gebunden sind, $C_{5-6}$-Cycloalk-1,1-diyl bedeuten, das gegebenenfalls durch 1 bis 3 Methyl- oder $C_{2-10}$-Alkylgruppen substituiert sein kann, oder worin $R^4$ und $R^6$ und/oder $R^3$ und $R^5$ unabhängig voneinander jeweils zusammen $-CH_2-CH_2-$ oder $-CH_2-CH_2-CH_2-$ bedeuten, die gegebenenfalls durch 1 bis 3 Methyl- oder $C_{2-10}$-Alkylgruppen substituiert sein können.

7. Verfahren nach Anspruch 2, dadurch gekennzeichnet, dass Peroxide der allgemeinen Formel XI verwendet werden, wobei bedeuten:

x' 0 und x 0 oder 1;

A =
i) gegebenenfalls durch OH substituiertes t-Alkyl, t-Alkenyl oder t-Alkinyl mit jeweils 5 bis 8 C-Atomen ,
ii) gegebenenfalls durch OH substituiertes t-Alkdiyl, t-Alkendiyl oder t-Alkindiyl mit jeweils 8 bis 10 C-Atomen ,
iii) gegebenenfalls durch 1 bis 3 Methyl substituiertes Cyclohex-1,1-diyl,
iv) oder einen Rest der Formel

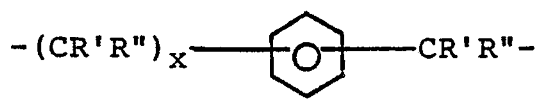 ,

worin R' einen Alkylrest mit 1 bis 3 C-Atomen, und R" einen Alkylrest mit 2 oder 3 C-Atomen bedeuten und

mit der Massgabe, dass x in $(R\text{-}OO)_x$- und in $-(CR'R'')_x$- dieselbe Bedeutung hat;
R =
i) gegebenenfalls durch OH substituiertes t-Alkyl, t-Alkenyl oder t-Alkinyl mit 5 bis 8 C-Atomen oder, falls x = 1, können zwei R zusammengenommen t-Alkdiyl, t-Alkendiyl oder t-Alkindiyl mit 8 bis 10 C-Atomen bedeuten,
ii) oder einen Rest der Formel

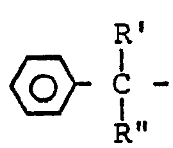 ,

wobei R' einen Alkylrest mit 1 bis 3 C-Atomen und R" einen Alkylrest mit 2 oder 3 C-Atomen bedeuten,
iii) oder einen Rest der Formel

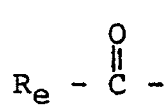

wobei $R_e$ gerades oder verzweigtes Alkyl mit 2 bis 10 C-Atomen, oder durch Methyl oder $C_1$-$C_{12}$-Alkoxycarbonyl substituiertes Phenyl bedeutet.

**8.** Verfahren nach Anspruch 3, dadurch gekennzeichnet, dass Peroxide der allgemeinen Formel XII verwendet werden, wobei bedeuten:

Y =
Alkdiyl, Alkendiyl oder Alkindiyl mit 2 bis 16 C-Atomen oder einen, durch eine $C_1$-$C_3$-Alkyl- oder -Alkoxy-Gruppe substituierten Benzolrest,

y =
2 und

$R^7$ =
t-Alkyl, t-Alkenyl oder t-Alkinyl mit 5 bis 8 C-Atomen, oder einen Rest der Formel

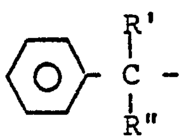 ,

wobei R' einen Alkylrest mit 1 bis 3 C-Atomen und R'' einen Alkylrest mit 2 oder 3 C-Atomen bedeuten.

**9.** Verfahren nach Anspruch 4, dadurch gekennzeichnet, dass Peroxide der allgemeinen Formel XIII verwendet werden, worin:

Z
einen Benzolrest bedeutet,

z
2 ist,

R'''
einen Alkylrest mit 1 bis 18 C-Atomen bedeutet, und

$R^7$
t-Alkyl, t-Alkenyl oder t-Alkinyl mit 5 bis 8 C-Atomen bedeutet.

**10.** Verfahren nach Anspruch 5, dadurch gekennzeichnet, dass Peroxide der allgemeinen Formel XIV mit einem Polymerisationsgrad von bis 20 verwendet werden, worin

$R_f$
gegebenenfalls durch $C_1$-$C_3$-Alkyl, $C_2$-$C_4$-Alkenyl oder $C_1$-$C_3$-Alkoxy substituiertes Alkdiyl, Alkendiyl oder Alkindiyl mit 2 bis 6 C-Atomen oder durch $C_1$-$C_3$-Alkyl, -Alkoxy, $C_1$-$C_3$-Alkylcarbonyl oder -Alkoxycarbonyl substituiertes Phenyl bedeutet und

V
i) gegebenenfalls durch Carboxy oder Methoxycarbonyl substituiertes t-Alkdiyl, t-Alkendiyl oder t-Alkindiyl mit 4 bis 8 C-Atomen
ii) oder einen Rest der Formel

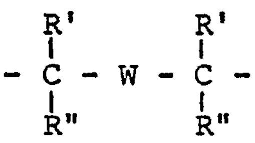

bedeutet,
wobei R' einen Alkylrest mit 1 bis 3 C-Atomen, R" einen Alkylrest mit 2 oder 3 C-Atomen und W Phenylen bedeuten.

11. Verfahren nach Anspruch 6, dadurch gekennzeichnet, dass Azo-ester der allgemeinen Formel XV verwendet werden, worin $R^1$, $R^2$, $R^3$ und $R^4$ gleich oder verschieden sein können und $C_{1-4}$-Alkyl bedeuten; $R^5$ und $R^6$ gleich oder verschieden sein können und H, Methyl oder Ethyl bedeuten; oder worin $R^2$ und $R^4$ und/oder $R^1$ und $R^3$ jeweils zusammen mit dem C-Atom, an das sie gebunden sind, Cyclohexdiyl bedeuten, oder worin $R^4$ und $R^6$ und/oder $R^3$ und $R^5$ unabhängig voneinander jeweils zusammen $-CH_2-CH_2-$ oder $-CH_2-CH_2-CH_2-$ bedeuten.

12. Verfahren gemäss Anspruch 7, dadurch gekennzeichnet, dass als Peroxid Di-t-amyl-peroxid, das Perketal XVI

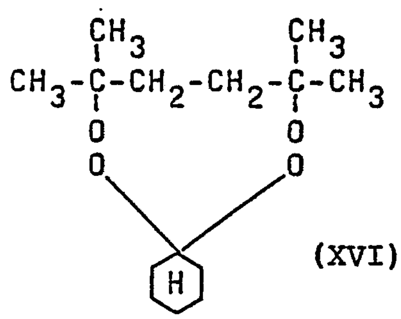

(XVI) ,

oder das Perketal XVII

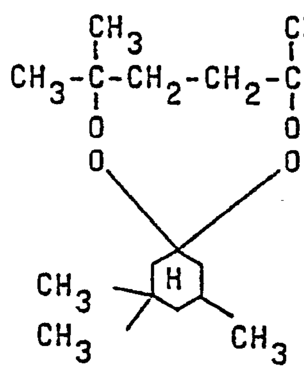

(XVII).

verwendet wird.

13. Verfahren gemäss Anspruch 11, dadurch gekennzeichnet, dass als Azo-ester 2,2'-Azo-bis(2-acetoxy-propan), 2,2'-Azo-bis(2-propionoxy-propan), oder 2,2'-Azo-bis(2-acetoxy-4-methyl-pentan) verwendet wird.

14. Verfahren gemäss Anspruch 1, dadurch gekennzeichnet, dass Kombinationen aus Peroxiden und Azo-estern angewandt werden.

15. Verfahren gemäss einem der Ansprüche 1 bis 14, dadurch gekennzeichnet, dass in Gegenwart von

Vernetzungsverstärkern vernetzt wird.

**16.** Verfahren gemäss Anspruch 15, dadurch gekennzeichnet, dass zur Erzielung einer Scorchzeitverlängerung zusätzlich zu Vernetzungsinitiator und Vernetzungsverstärker ein oder mehrere Antioxidantien aus der Gruppe von Hydrochinonderivate als Scorchzeitverlängerer der allgemeinen Formeln XXI und XXII

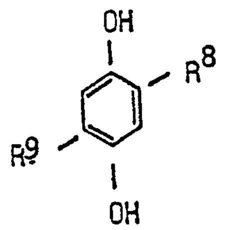

(XXI)

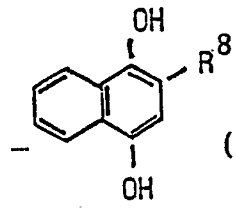

(XXII)

dem zu vernetzenden Fluorkautschuk zugesetzt werden, wobei $R^8$ und $R^9$, die gleich oder verschieden sein können, folgende Bedeutung haben: H, t-Alkyl mit 4 bis 20 (vorzugsweise 4 bis 8) C-Atomen, Alkylcycloalkyl mit 1 bis 10 (vorzugsweise 1 bis 3) C-Atomen im Alkylrest und 5 bis 12 (vorzugsweise 5 oder 6) C-Atomen im Cycloalkylrest, Aryl-$C_{4-10}$-t-alkyl oder $C_{1-4}$-Alkyl-aryl-$C_{4-10}$-t-alkyl, worin Aryl wie oben definiert ist.